(19) Europäisches Patentamt / European Patent Office / Office européen des brevets

(11) **EP 1 372 836 B1**

(12) **EUROPÄISCHE PATENTSCHRIFT**

(45) Veröffentlichungstag und Bekanntmachung des Hinweises auf die Patenterteilung:
**10.09.2008   Patentblatt 2008/37**

(51) Int Cl.:
**B01J 2/02** *(2006.01)*

(21) Anmeldenummer: **02712899.0**

(22) Anmeldetag: **06.02.2002**

(86) Internationale Anmeldenummer:
**PCT/EP2002/001276**

(87) Internationale Veröffentlichungsnummer:
**WO 2002/062461 (15.08.2002 Gazette 2002/33)**

(54) **VERFAHREN UND VORRICHTUNG ZUR HERSTELLUNG VON TEILCHEN AUS FLÜSSIGEN AUSGANGSMEDIEN**

METHOD AND DEVICE FOR THE PRODUCTION OF PARTICLES FROM LIQUID STARTING MATERIALS

PROCEDE ET DISPOSITIF DE PRODUCTION DE PARTICULES A PARTIR DE MILIEUX DE DEPART LIQUIDES

(84) Benannte Vertragsstaaten:
**AT BE CH CY DE DK ES FI FR GB GR IE IT LI LU MC NL PT SE TR**

(30) Priorität: **06.02.2001   DE 10105156**

(43) Veröffentlichungstag der Anmeldung:
**02.01.2004   Patentblatt 2004/01**

(73) Patentinhaber: **Bruske, Frank
38300 Wolfenbüttel (DE)**

(72) Erfinder: **BRUSKE, Alfred
48153 Münster (DE)**

(74) Vertreter: **Einsel, Martin
Patentanwälte
Einsel & Kollegen
Jasperalle 1a
38102 Braunschweig (DE)**

(56) Entgegenhaltungen:
**WO-A-01/00311          CH-A- 664 298
DE-A- 4 013 811         DE-A- 19 617 924
DE-A- 19 619 811        US-A- 4 393 021**

- **PATENT ABSTRACTS OF JAPAN vol. 018, no. 529 (M-1684), 6. Oktober 1994 (1994-10-06) & JP 06 184607 A (RYUZO WATANABE;OTHERS: 02), 5. Juli 1994 (1994-07-05)**
- **PATENT ABSTRACTS OF JAPAN vol. 1996, no. 02, 29. Februar 1996 (1996-02-29) & JP 07 251001 A (IWAO KUWABARA), 3. Oktober 1995 (1995-10-03)**

**Beschreibung**

Die vorliegende Erfindung betrifft ein Verfahren zur Herstellung von verfestigten Teilchen aus einem flüssigen Ausgangsmaterial, indem von dem flüssigen Ausgangsmaterial portionsweise einzelne Flüssigkeitsvolumina abgetrennt werden und diese portionierten Flüssigkeitsvolumina in eine Umgebung eingebracht werden, die die Verfestigung zu einzelnen Teilchen bewirkt sowie Vorrichtungen hierfür.

Feste Teilchen oder Mikroteilchen hergestellt aus flüssigen Medien können in den Bereichen Medizin, Pharmazie, Biotechnologie, der Agrochemie, der Nahrungsmittel- und der chemischen Industrie eingesetzt werden. So können hierzu ausgewählte Wirkstoffe in ein zunächst in flüssigem Zustand vorliegendes Trägermedium eingebracht werden. In einem anschließenden Verfahren wird das Trägermedium mit dem Wirkstoff als flüssiges Precursorteilchen portioniert, und in eine die Verfestigung des flüssigen Precursorteilchens bewirkende Umgebung eingeleitet. Die in Form der nunmehr verfestigten und ausgehärteten Teilchen vorliegenden Wirksubstanzen weisen je nach Art der Wirksubstanz sowie Form, Größe und Verteilung der Mikroteilchen vorteilhafte chemische, biologische und/oder physikalische Eigenschaften auf.

Trägermedien für die Herstellung von festen Teilchen über die Verfestigung von flüssigen Precursorteilchen sind an sich bekannt. Es kann sich hierbei zum Beispiel um Monomer- und Polymerflüssigkeiten, ionisch vernetzte Gele (zum Beispiel Natriumalginat), thermisch vernetzte Gele (zum Beispiel Agar Agar), Gelatine, Metalloxide, Hydroxylzellulose, Polyvinylalkohol, Wachse, Harze, Schmelzen, usw. handeln.

Medien zur Verfestigung derartiger Trägermedien sind ebenfalls allgemein bekannt. So kann die Verfestigung, beziehungsweise Gelierung von Natriumalginat unter Anwesenheit von Kalium- oder Kalziumionen erfolgen, welche in einer sogenannten Vernetzerlösung in einem Auffangbad vorgelegt werden.

Bekannt sind Vorrichtungen bei denen die zur Herstellung der festen Teilchen verwendete Flüssigkeit als Strahl durch entsprechend gestaltete Düsen geleitet wird und der Flüssigkeitsstrahl unmittelbar nach dem Durchströmen des Düsenkörpers in einzelne separate Tropfen zerteilt oder zerstäubt wird.

Eine Vorrichtung, bei der die Zerteilung mittels Vibration erfolgt, ist aus der DE 2 221 310 C2 bekannt. Die Zerteilung in Tropfen erfolgt über eine mit einem Vibrationsantrieb verbundene Düsenanordnung. Die Tropfen werden in einem nachgeschalteten Reaktionsbehälter aufgefangen und verfestigt.

Eine Vorrichtung zur Herstellung von sphärischen Granulaten durch Vibrationsbeziehungsweise Schwingungsanregung ist in der DE 196 17 924 A1 beschrieben. Die Ausbildung der einzelnen Tropfen wird durch direkte Schwingungsanregung auf die zu vertropfende Flüssigkeit erreicht. Die Übertragung der Schwingung auf die Flüssigkeit erfolgt hierbei durch einen in Schwingung versetzen elastischen Körper oder durch Einbringung eines Piezokristalls oder einer Ultraschallsonde.

In der DE 34 17 899 C1 ist beispielsweise die Zerstäubung von Flüssigkeiten mit Hilfe eines rotierenden Zylinders mit an der Zylinderwand eingebrachten Öffnungen beschrieben. Durch die entsprechenden Öffnungen werden Tropfen in eine Vernetzerlösung geschleudert. Die Vernetzerlösung befindet sich in einem um den Zylinder ebenfalls rotierend angebrachten Behälter und bildet durch die Rotation einen parabolischen Flüssigkeitsspiegel aus, über den die von der Zylinderwand abgeschleuderten Tröpfchen zur Aushärtung in die Vernetzerlösung gelangen.

Aus der DE 44 24 998 C2 ist eine Vorrichtung bekannt, wonach zunächst ein Flüssigkeitsvollstrahl aus einer Düse gedrückt und in einem anschließenden Schritt mittels einer Teilvorrichtung in einzelne Abschnitte zerteilt wird. Die Ausbildung der Flüssigkeitsabschnitte erfolgt dadurch, dass aus dem Flüssigkeitsstrahl Flüssigkeitsanteile mittels der Teilvorrichtung periodisch hinausgeschleudert und so tropfenförmige Teilchen gebildet werden. Nur der Teil, der im Strahl verbleibt, gelangt zur Verfestigung, der hinausgeschleuderte Anteil stellt einen Schnitt- beziehungsweise Spritzverlust dar.

Weitere Vorrichtungen zur Erzeugung und dem portionierten Ausstoß kleiner Tropfen sind aus der Technologie der Tintenstrahldrucker bekannt. Hierbei wird der Ausstoß der Tintentröpfchen über eine induzierte Fluidverdrängung bewirkt. Diese Verdrängung kann piezoelektrisch über die Verformung eines Körpers, thermoelektrisch durch Erzeugung einer Dampfblase (zum Beispiel WO 96/32242), durch die Erzeugung einer akustischen Druckwelle oder elektrodynamisch durch rotatorische Paddelbewegung in einem Magnetfeld (zum Beispiel US 4,150,201) erfolgen.

In WO 01/00311 A1 wird ein Verfahren und eine Vorrichtung zur Teilchenerzeugung beschrieben, wobei durch Vibration eines Stößels in einer Flüssigkeit Druckwellen erzeugt werden, wobei Flüssigkeitströpfchen durch Öffnungen am Boden der Vorrichtung austreten. Dabei wird auf den Flüssigkeitsfilm Druck ausgeübt, wodurch sich das Volumen der Flüssigkeit periodisch verändert.

US 4,393,021 beschreibt ein Verfahren und eine Vorrichtung zur Herstellung von Schleifkorngranulat. Die Vorrichtung weist Stahlstäbe auf, die auf dem Umfang eines zylindrischen Rotors parallel zur Drehachse angeordnet sind, wobei der angetriebene Stabrotor bei Drehung mit den Stäben an einem Siebgewebe vorbei streift und das aufgegebene Schleifkorngemisch durch das Siebgewebe presst. Dabei werden kontinuierliche einheitliche zylindrische Granulate erhalten.

In JP-A-07 251 001 ist eine Vorrichtung zur Trocknung von wasserhaltigen Materialien beschrieben, die einen vertikal angeordneten rotierenden Zylinder umfasst. Das zu trocknende Material wird von oben dem Zylinder zugesetzt, gelangt an die innere Oberfläche des Zylinders und wird getrocknet.

Bei den herkömmlichen Verfahren stellt die Viskosität der Ausgangsflüssigkeiten einen für das jeweilige Verfahren limitierenden Faktor dar, so dass entweder nur niedrigviskose Flüssigkeiten oder nur höherviskose Flüssigkeiten verarbeitet werden können. Weiter stellt die Herstellung von Teilchen in monodisperser Größenverteilung aufgrund der unvorhersehbar variierenden Koaleszenz einzelner Teilchen zu einem größeren Teilchen ein Problem dar. Auch ist die Herstellung von Teilchen mit einer zentrierten Kern- und einer Hüllflüssigkeit nur bedingt oder gar nicht möglich. Darüber hinaus ist es wünschenswert, produktionstechnische Maßstäbe wie Durchsatzmengen zu erhöhen sowie verfahrenstechnisch bedingte Verluste an Ausgangsmedium zu vermeiden.

Der vorliegenden Erfindung liegt damit generell die Aufgabe zugrunde, die Zuverlässigkeit und den Einsatzbereich von Verfahren und Vorrichtungen zur Herstellung von festen Teilchen aus flüssigen Medien zu verbessern.

Insbesondere war es Aufgabe der Erfindung, Verfahren und Vorrichtungen hierfür zur Verfügung zu stellen, die folgende vorteilhaften Eigenschaften aufweisen sollen:

- Herstellung von Mikroteilchen innerhalb eines breiten Größenbereichs, insbesondere zum Beispiel im Bereich von 6 mm bis 150 μm und kleiner,
- Herstellung von Mikroteilchen in monodisperser Größenverteilung,
- Herstellung von mehrschichtigen Teilchen,
- Verarbeitbarkeit von flüssigen Ausgangsmedien mit den unterschiedlichsten Stoffeigenschaften, von niedrig- und hochviskosen Flüssigkeiten, insbesondere auch in Viskositätsbereichen von mehr als 500 mPas und weniger als 200 mPas, Flüssigkeiten mit Feststoffanteilen sowie hochtemperierten Schmelzen,
- kein Verstopfen der Düsen auch bei kleinsten Düsendurchmessern,
- einfache Anpassung des mechanischen Energieeintrags an die Stoffeigenschaften des Ausgangsmediums über die Stärke der Stoßkraft,
- hohe Produktionsrate, insbesondere durch die Erzeugung hochfrequenter Kraftstöße (mechanischer Impulse) bis zu 12.000 Hz, und
- verlustfreie Herstellung der Mikroteilchen ohne Sprühnebelausbildung

Erfindungsgemäß wird diese Aufgabe durch ein Verfahren nach Anspruch 1 gelöst, gemäß dem aus einem Ausgangsmedium portionsweise flüssige Teilchen in eine Umgebung eingebracht werden, die die Verfestigung unter Ausbildung von festen Teilchen bewirkt, wobei zwischen einer Stoßblende und einer Stoßmasse ein Flüssigkeitsfilm über mindestens einer Öffnung aus dem flüssigen Ausgangsmedium ausgebildet wird, auf den Flüssigkeitsfilm ein mechanischer Impuls übertragen wird und infolge der Impulsübertragung ein Teil des Flüssigkeitsfilms sowie die Kapillarflüssigkeit, die sich in der mindestens einen Öffnung ausgebildet hat, als flüssiges Teilchen durch die mindestens eine Öffnung ausgestoßen wird, wobei die Impulsübertragung auf einen während der Betriebsdauer gleich bleibenden Flüssigkeitsfilm erfolgt.

Weiter wird erfindungsgemäß eine Vorrichtung zur Herstellung von festen Teilchen aus einem flüssigen Medium mit den Merkmalen gemäß Anspruch 11 zur Verfügung gestellt.

Die Unteransprüche 12 bis 26 betreffen besondere Ausgestaltungen der Vorrichtung gemäß Anspruch 11.

Gemäß einem weiteren Aspekt betrifft die Erfindung eine derartige Vorrichtung umfassend einen Stoßantrieb mit Stoßelementen, einen Mikroteilchenextruder mit einem Stoßaufnehmer zur Aufnahme und Übertragung des durch die Stoßelemente ausgeübten Impulses, mindestens einer Stellvorrichtung zur Zurücksetzung des Stoßaufnehmers in die Ausgangslage sowie mindestens eine Stoßvorrichtung.

Gemäß einem weiteren Aspekt betrifft die Erfindung eine derartige Vorrichtung, die die ausgestoßenen flüssigen Teilchen in eine spiralförmige Flugbahn versetzt, umfassend einen um seine Längsachse in Drehung versetzbaren Hohlzylinder mit einem auf der äußeren Mantelfläche befestigten Schleifring und einer auf der inneren Mantelfläche befestigten Elektrode, wobei die Elektrode über eine Verbindungsleitung mit dem Schleifring verbunden ist, einer Schleifbürste, die am Schleifring lose aufliegt und mit einem Hochspannungserzeuger verbindbar ist, sowie einer Erdungsleitung, wobei der Hohlzylinder zur Eintrittsrichtung der Teilchen hin offen ist.

Gemäß einem weiteren Aspekt betrifft die Erfindung eine derartige Vorrichtung, die die ausgestoßenen flüssigen Teilchen in eine spiralförmige Flugbahn versetzt, mit zwei oder mehr Schleifringen und/oder zwei oder mehr Elektroden.

Im Sinne der vorliegenden Erfindung ist beziehungsweise wirkt ein Bauteil, auf dem ein Flüssigkeitsfilm zur Abtrennung von flüssigen Teilchen ausgebildet wird, als Stoßblende.

Stoßmasse ist das Gegenstück zur Stoßblende, wobei zur Stoßübertragung Stoßmasse und/oder Stoßblende aufeinandertreffen oder sich annähern.

Als Aktor wird ein beweglich ausgeführtes Bauteil bezeichnet, das einen Stoß auf den Flüssigkeitsfilm überträgt.

Für vorliegende Erfindung ist entweder die Stoßblende oder die Stoßmasse beweglich als Aktor ausgeführt, die jeweils entsprechende Stoßmasse beziehungsweise Stoßblende bildet einen feststehenden Gegenkörper. Alternativ können aber auch sowohl die Stoßblende als auch die Stoßmasse beweglich ausgeführt sein.

Als Stoßaufnehmer wird ein Bauteil der Vorrichtung bezeichnet, auf das der Antrieb unmittelbar den Impuls überträgt, das heißt das den Impuls vom Antrieb aufnimmt und weiterleitet.

Bei dem erfindungsgemäßen Verfahren erfolgt die Teilung eines vorab ausgebildeten Flüssigkeitsfilms, indem auf die Oberfläche eines Flüssigkeitsfilms ein mechanischer Impuls (nachstehend auch als "Stoß" bezeichnet) ausgeübt wird, und damit eine kurzzeitige große Krafteinwirkung, die eine Abtrennung von definierten Flüssigkeitsvolumina als flüssige Teilchen bewirkt.

Im Gegensatz dazu wird bei den herkömmlichen Verfahren die Flüssigkeit durch entsprechend gestaltete Düsen geleitet. Die Zerteilung in einzelne Teilchen beziehungsweise Tröpfchen erfolgt dabei entweder unmittelbar nach dem Durchströmen des Düsenkörpers oder das flüssige Medium, das in Form eines Flüssigkeitsstrahls vorliegt, zerfällt unter entsprechenden Bedingungen entweder von selbst oder durch erzwungene äußere Einflüsse, oder die Flüssigkeit wird durch induzierte Fluidverdrängung piezoelektrisch, thermoelektrisch, in einer akustischen Druckwelle oder elektrodynamisch portioniert. Bei den herkömmlichen Verfahren bewegen sich die flüssigen Teilchen ausschließlich auf geraden Bahnen.

Bei dem erfindungsgemäßen Verfahren wird ein mechanischer Impuls, das heißt ein Stoß, auf ein als Aktor ausgeführtes Bauteil übertragen. Der mechanische Energieeintrag beziehungsweise die Stoßkraft wird weitergeleitet, indem sich der linear in Richtung der Stoßnormalen bewegte Aktor mit hoher Geschwindigkeit einem Gegenkörper annähert oder auf diesen auftrifft.

Auf der Stoßblende und damit zwischen Aktor und Gegenkörper wird ein Flüssigkeitsfilm ausgebildet, wobei ein Teil des Flüssigkeitsfilms innerhalb der mindestens einen Öffnung als Kapillaflüssigkeit zu stehen kommt.

Bei Annäherung beziehungsweise Aufeinandertreffen des Aktors und des Gegenkörpers überträgt der Aktor einen Stoß auf den feststehenden Gegenkörper und gleichzeitig auf den Flüssigkeitsfilm sowie die innerhalb der Öffnung befindliche Kapillarflüssigkeit. Die Kapillarflüssigkeit sowie ein Teil des darüber befindlichen Flüssigkeitsfilms erfahren dadurch eine Beschleunigung und werden aus der Öffnung als Teilchen ausgestoßen.

Die Größe, Gestalt und Anzahl der gebildeten Teilchen hängen hierbei im Wesentlichen von der Stärke des Flüssigkeitsfilms und der Kapillarflüssigkeit ab, das heißt von der Größe und Anzahl der Öffnungen und dem Verhältnis von Stoßfrequenz zur Geschwindigkeit der nachströmenden Flüssigkeit sowie von dem Verlauf der Bewegungsbahn und der Dauer der Verweilzeit der Teilchen vor dem Erreichen des Verfestigungsmediums.

Erfindungsgemäß besonders bevorzugt erfolgt die Übertragung des Stoßes von dem Aktor auf den Gegenkörper gerade und insbesondere zentral. Im Sinne der Erfindung bedeutet der Begriff "gerader Stoß", dass der Aktor linear entlang der Stoßnormalen bewegt wird, wobei die Stoßnormale senkrecht zur Oberfläche des Flüssigkeitsfilms verläuft.

Für die Übertragung eines geraden und insbesondere zentralen Stoßes ist es von Vorteil, wenn die Annäherung von Aktor und Gegenkörper allein durch die Bewegung und nicht durch eine Verformung oder Verbiegung des Aktors beziehungsweise Gegenkörpers erfolgt.

Wenn Aktor, Gegenkörper und Flüssigkeitsfilm gerade stoßen, gleiten diese nicht aufeinander, so dass keine Reibungskräfte an den Körperoberflächen auftreten. Auf Aktor, Gegenkörper und Flüssigkeitsfilm wirken somit nur die geraden Stoßkräfte in Richtung der Stoßnormalen. Da der Stoß zudem vorzugsweise zentral erfolgt, gehen die Stoßkräfte durch die Körperschwerpunkte beziehungsweise Mittelpunkte von Aktor und Gegenkörper und es werden keine Drehbewegungen der Teilchen eingeleitet.

Durch die gerade Stoßführung kann die übertragende Stoßkraft noch gesteigert werden, da der Stoß gleichmäßig auf den Flüssigkeitsfilm einwirkt und sich zwischen Aktor und Gegenkörper kein unterschiedlich dicker Flüssigkeitskeil ausbildet, der auf der einen Seite stärker ist als auf der anderen.

Durch diese Maßnahme wird zudem bewirkt, dass das Volumen der ausgestoßenen Flüssigkeit und damit die Größe der zu bildenden Teilchen gleichförmig bleibt.

Werden die flüssigen Teilchen dagegen in Eigenrotation versetzt, können sich diese infolge der einwirkenden Fliehkräfte verformen, so dass die Gestalt der resultierenden festen Teilchen unregelmäßig wird. Aufgrund der Fliehkräfte kann es zur Abtrennung von kleinen Flüssigkeitsanteilen aus den flüssigen Teilchen kommen, mit der Folge, dass die Größe der resultierenden Teilchen unvorhersehbar variiert und entsprechende Verluste an Ausgangsmedium in Kauf genommen werden müssen.

Erfindungsgemäß besonders bevorzugt erfolgt die Weiterbewegung der im allgemeinen als wässrige Lösung vorliegenden flüssigen Teilchen nach dem Verlassen der Vorrichtung und vor Erreichen des Verfestigungsmediums auf einer Spiralbahn.

Die Spiralbahn kann zum Beispiel durch ein sich drehendes elektrostatisches Feld erzeugt werden.

Der Vorteil der Teilchenbewegung auf einer Spiralbahn vor dem Erreichen des Verfestigungsmediums liegt in der Vermeidung des Aufeinandertreffens einzelner Teilchen und damit in einer Begünstigung der Ausbildung einer monodispersen Teilchengrößenverteilung. Weiter erfolgt eine Erhöhung der Verweilzeit der Teilchen vor dem Erreichen des Verfestigungsmediums und somit eine Verbesserung in der Ausbildung der bevorzugt gewünschten sphärischen Mikroteilchenform.

Die Durchführung des erfindungsgemäßen Verfahrens kann mit einer Vorrichtung erfolgen unter Anderem umfassend einen Mikroteilchenextruder, in dem mindestens eine Stoßvorrichtung enthalten ist, mit mindestens einer Stoßblende, mindestens einer Öffnung, einer Stoßmasse, wobei entweder die Stoßblende oder die Stoßmasse als bewegter Aktor ausgestaltet sind und der Aktor im Betrieb auf den Gegenkörper, das heißt die jeweils dazugehörende entsprechende Stoßmasse oder Stoßblende, einen Stoß ausübt und Mitteln zur Ausbildung eines Flüssigkeitsfilms auf der Stoßblende.

In Betrieb wird über einen Stoßantrieb in periodischen Abständen ein Stoß bzw. mechanischer Impuls auf den Aktor und Gegenkörper der Stoßvorrichtung übertragen.

Gleichzeitig wird auf der Stoßblende und damit zwischen Aktor und Gegenkörper ein Flüssigkeitsfilm ausgebildet, wobei ein Teil der Flüssigkeit in der mindestens einen Öffnung als sogenannte Kapillarflüssigkeit zu stehen kommt.

Der Aktor wird linear in Richtung der Stoßnormalen auf den Flüssigkeitsfilm zubewegt, und überträgt einen vorzugsweise geraden, insbesondere zentralen Stoß auf den Gegenkörper sowie auf die innerhalb der mindestens einen Öffnung befindlichen Kapillarflüssigkeit.

Der Stoßantrieb kann zur Stoßübertragung ein oder mehrere Stoßelemente aufweisen. Der Mikroteilchenextruder kann zur Aufnahme des Stoßes mit einem Stoßaufnehmer versehen sein, der den Stoß an den Aktor weitergibt, oder der Aktor kann selbst als Stoßaufnehmer wirken, wenn der Stoß direkt auf den Aktor ausgeübt wird.

Zur Rückstellung des Stoßaufnehmers und des Aktors in die Ausgangslage vor dem Stoß können in dem Mikroteilchenextruder ein oder mehrere Stellvorrichtungen vorgesehen sein.

In Bewegungsrichtung der ausgestoßenen flüssigen Mikroteilchen kann eine Hochspannungsvorrichtung vorgesehen sein, wobei die flüssigen Mikroteilchen bei Durchtritt durch die Hochspannungsvorrichtung in einem drehenden elektrostatischen Feld auf einer Spiralbahn geführt werden.

Nachfolgend ist in der Bewegungsrichtung der flüssigen Mikroteilchen ein geeignetes Verfestigungsmedium oder eine entsprechende Umgebung vorgesehen, wobei die flüssigen Mikroteilchen bei Auftreffen in das Verfestigungsmedium beziehungsweise Durchtritt durch diese Umgebung entsprechend verfestigt werden.

Der in der Stoßvorrichtung erfindungsgemäß gebildete Flüssigkeitsfilm weist eine gleichmäßige Stärke auf, wobei die Stärke des Films vorzugsweise nicht nur während der Bildung eines einzelnen Teilchens gleichmäßig ist, sondern auch die durch nachströmendes Ausgangsmedium periodisch gebildeten Flüssigkeitsfilme während der gesamten Verfahrensdauer eine gleichbleibende Stärke aufweisen. Im Sinne der Erfindung bedeutet somit der Begriff "gleichmäßiger Flüssigkeitsfilm", dass der gebildete Flüssigkeitsfilm, auf den der Aktor einwirkt, eine gleichbleibende Stärke aufweist.

Diese Maßnahme fördert die Ausbildung gleichmäßig großer Teilchen mit enger Teilchengrößenverteilung, da bei Stoßübertragung zusammen mit der Kapillarflüssigkeit auch ein Teil des darüber befindlichen Flüssigkeitsfilms mit ausgestoßen wird. Für den Idealfall gilt hierbei, dass die Länge des flüssigen Teilchens der Filmdicke entspricht.

Das Vorsehen eines gleichmäßigen Flüssigkeitsfilms bewirkt zudem die gleichmäßige Stoß- beziehungsweise Impulsübertragung auf den Flüssigkeitsfilm, wobei der nachströmende seitliche Flüssigkeitsanteil gleich bleibt und damit ein gleichförmiger Teilchenausstoß erzielt wird.

In der erfindungsgemäßen Vorrichtung wird daher vorzugsweise eine Abgrenzung vorgesehen, die die Oberfläche des Flüssigkeitsfilms abgrenzt und somit dessen Stärke begrenzt. Diese Abgrenzung kann durch Ausbildung eines Luftraumes oberhalb des Flüssigkeitsfilms erfolgen oder durch bauliche Maßnahmen bewirkt werden wie das Vorsehen einer festen Abgrenzung.

Erfindungsgemäß ist es zudem bevorzugt, wenn die Beschleunigung des Aktors im Wesentlichen oder vollständig außerhalb des Flüssigkeitsfilms erfolgt, nachfolgend "Entkopplung" bezeichnet.

Damit kann die Beschleunigung des Aktors in einem Medium erfolgen, das einen geringeren Widerstand als der Flüssigkeitsfilm aufweist, wie zum Beispiel in einem gasförmigen Medium, insbesondere Luft.

Durch die geringere Reibung kann eine größere Beschleunigung und damit eine größere Kraft erzeugt werden. Zudem wird eine Verwirbelung des Flüssigkeitsfilms und als Folge davon die Ausbildung einer unregelmäßigen Filmdicke vermieden, die bei Beschleunigung des Aktors in der Flüssigkeit auftreten würde.

Die Entkopplung kann mit dem gleichen Mittel wie die Abgrenzung des Flüssigkeitsfilms erfolgen, wie sie vorstehend genannt sowie nachfolgend anhand der bevorzugten Ausführungsformen erläutert werden.

Mit dem erfindungsgemäßen Verfahren ist aufgrund des sehr kurzzeitig durchführbaren Stoßvorgangs, die Erzeugung außerordentlich hoher Stoßkräfte möglich. Aufgrund der einstellbaren sehr hohen Stoßkräfte ist mit dem erfindungsgemäßen Verfahren neben der Verarbeitung niedrigviskoser Flüssigkeiten, auch die Verarbeitung von hochviskosen Flüssigkeiten beziehungsweise Flüssigkeiten mit Feststoffanteilen möglich. Zudem ermöglicht das erfindungsgemäße Verfahren die Verarbeitung von Zwei- und Mehrstoffsystemen. Des Weiteren bedingen die hohen Stoßkräfte bei gleichzeitig möglicher hoher Stoßfrequenz eine sehr hohe Durchsatzrate auch bei monodisperser Teilchengrößenverteilung unter verlustfreier Verarbeitung, was durch die bevorzugte Bewegung der Teilchen auf einer Spiralbahn noch unterstützt und gesteigert wird, und damit die Eignung des erfindungsgemäßen Verfahrens für den produktionstechnischen Einsatz.

Die hohen Stoßkräfte verhindern zugleich ein Verstopfen der Austrittsöffnungen und/oder Ablenken des Teilchenstrahls durch sich festsetzende Flüssigkeitskomponenten beziehungsweise Feststoffanteile.

Die Zuführung des flüssigen Ausgangsmediums für die Herstellung der Mikroteilchen kann an sich über jede beliebige geeignete Zuleitung erfolgen, über die das Ausgangsmedium in die Stoßvorrichtung zur Ausbildung eines Flüssigkeitsfilms geleitet wird.

Die Regulierung der Nachströmungsgeschwindigkeit des Ausgangsmediums in die Stoßvorrichtung kann zum Beispiel mittels Druckbeaufschlagung bewirkt werden.

Nachstehend wird das erfindungsgemäße Verfahren und die erfindungsgemäße Vorrichtungen anhand von Figuren mit Prinzipienskizzen und bevorzugten konkreten konstruktiven Ausführungsbeispielen näher erläutert, die Längsschnitte zeigen. Die Figuren dienen hierbei lediglich zur besseren Veranschaulichung der vorliegenden Erfindung, ohne die Erfindung auf die gezeigten besonders bevorzugten konkreten Ausführungsformen zu beschränken.

Es zeigen hierbei:

Figur 1        eine Prinzipienskizze für eine drückende Stoßübertragung;

Figur 2        eine zweite Prinzipienskizze für eine drückende Stoßübertragung;

Figur 3        eine Prinzipienskizze für eine ziehende Stoßübertragung;

Figur 4        eine zweite Prinzipienskizze für eine ziehende Stoßübertragung;

Figur 5        eine Prinzipienskizze für eine drückende oder ziehende Stoßübertragung mit Teilchenausstoß senkrecht zur Stoßnormalen:

Figur 6        eine zweite Prinzipienskizze für eine drückende oder ziehende Stoßübertragung mit Teilchenausstoß senkrecht zur Stoßnormalen;

Figur 7        ein Ausführungsbeispiel einer erfindungsgemäßen Vorrichtung mit drückender Stoßvorrichtung;

Figur 7.1        das Ausführungsbeispiel gemäß Figur 7 zum Zeitpunkt der Ausbildung eines Flüssigkeitsfilms;

Figur 7.2        das Ausführungsbeispiel gemäß Figur 7 zum Zeitpunkt der Ausbildung eines flüssigen Mikroteilchens; eingestellt für niedrigviskose Flüssigkeiten;

Figur 8        ein Ausführungsbeispiel einer erfindungsgemäßen Vorrichtung mit drückender Stoßvorrichtung zur Herstellung von Mehrschichtteilchen;

Figur 8.1        das Ausführungsbeispiel gemäß Figur 8 zum Zeitpunkt der Ausbildung eines Mehrkomponentenflüssigkeitsfilms;

Figur 8.2        das Ausführungsbeispiel gemäß Figur 8 zum Zeitpunkt der Ausbildung einer zentrierten Kernflüssigkeit; und

Fig. 9        ein Ausführungsbeispiel für eine erfindungsgemäße Vorrichtung zur Herstellung von Teilchen mit Kern und Hülle mit bevorzugter Ausgestaltung;

Fig. 10        ein zweites Ausführungsbeispiel für eine erfindungsgemäße Vorrichtung zur Herstellung von Teilchen mit Kern und Hülle mit bevorzugter Ausgestaltung;

Figur 10.1        das Ausführungsbeispiel gemäß Figur 10 zum Zeitpunkt der Ausbildung einer zentrierten Kernflüssigkeit;

Fig. 11.1 bis 11.2        ein Ausführungsbeispiel für eine erfindungsgemäße Stoßvorrichtung zur Erzeugung hochfrequenter Kraftstöße;

Fig. 12.1 bis 12.2      ein zweites Ausführungsbeispiel für eine erfindungsgemäße Stoßvorrichtung zur Erzeugung hochfrequenter Kraftstöße;

Fig. 13      Ausführungsbeispiel einer erfindungsgemäßen Hochspannungsvorrichtung zur Bewegung von Teilchen auf einer Spiral bahn.

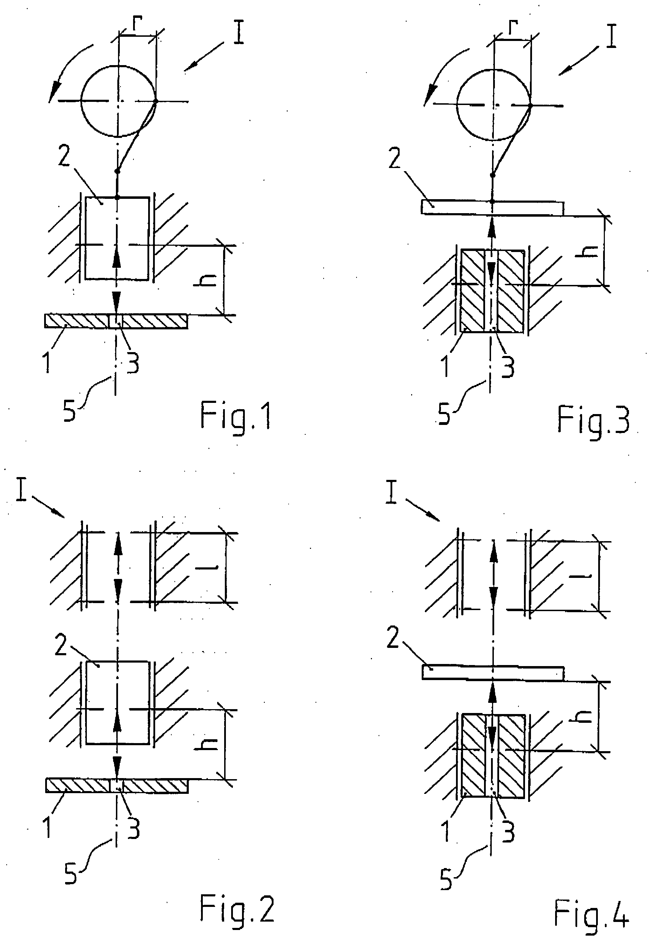

Erfindungsgemäß kann der Stoß mit dem Aktor gegen einen feststehenden Gegenkörper geführt werden, indem der Aktor von oben auf den Gegenkörper drückend oder von unten gegen den Gegenkörper ziehend bewegt wird wie in Figuren 1 bis 6 schematisch veranschaulicht. Der Gegenkörper kann wie hier gezeigt feststehend oder ebenfalls beweglich ausgeführt sein.

In den Figuren 1 bis 6 sind Stoßvorrichtungen III gezeigt, die eine Stoßblende 1, eine Stoßmasse 2 sowie in der Stoßblende eine Öffnung 3 und einen Stoßantrieb I aufweisen. In Betrieb befindet sich auf der Stoßblende 1 und damit zwischen dem Aktor und dem Gegenkörper ein Flüssigkeitsfilm und folglich in der Öffnung 3 Kapillarflüssigkeit, die hier nicht gezeigt ist.

In Figuren 1, 2, 5 und 6 ist das Prinzip einer drückenden Stoßvorrichtung gezeigt, wobei die Stoßmasse 2 als beweglicher Aktor von oben gegen die Stoßblende 1 als feststehenden Gegenkörper linear in Richtung der Stoßnormalen 5 bewegt wird. Bei Auftreffen beziehungsweise Annäherung der Stoßmasse 2 auf die Stoßblende 1 wird auf diese und folglich auf den Flüssigkeitsfilm ein gerader Stoß übertragen, wodurch die Kapillarflüssigkeit aus der Öffnung 3 als flüssiges Mikroteilchen austritt.

Wie bereits vorstehend erläutert, wird zusammen mit der Kapillarflüssigkeit auch der über der Öffnung 3 befindliche Anteil des Flüssigkeitsfilms 6 mit ausgestoßen.

In Figuren 3 und 4 ist das Prinzip einer ziehenden Stoßvorrichtung gezeigt. Hierbei wirkt die Stoßblende 1 als Aktor, der von unten gegen eine Stoßmasse 2 als Gegenkörper bewegt beziehungsweise gezogen wird.

Die für einen Stoß benötigte Stoßkraft kann durch einen beliebigen Stoßantrieb I erzeugt werden. Beispielsweise kann eine Drehbewegung in eine lineare Stoßbewegung, dargestellt in den Figuren 1, 3 und 5, umgewandelt werden.

Wie in Figuren 2, 4 und 6 gezeigt, kann die benötigte Stoßkraft auch durch direkte Übertragung einer linearen Stoßbewegung erzeugt werden.

Als Aktor kann ein Kolben oder ähnliches gewählt werden. Beispiele für Antriebe sind Elektro- und Pneumatikantriebe. Es können je nach Bedarf und Ausführungsform eine Vielzahl von Öffnungen sowie als Stoßblenden wirkende Bauteile vorgesehen sein.

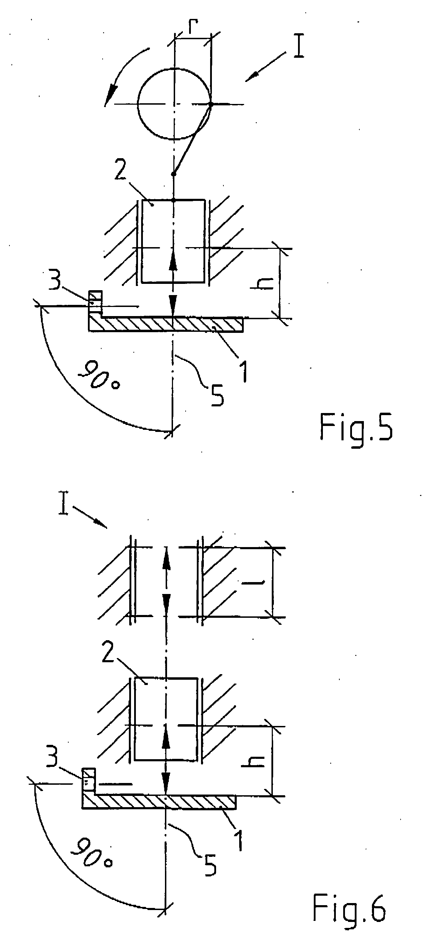

Wie in den Figuren 1 bis 4 dargestellt, kann die Öffnung 3 zentrisch in Richtung der Stoßnormalen 5 angeordnet sein, oder auch in einem Winkel von 90° zur Stoßnormalen 5 positioniert sein, dargestellt in den Figuren 5 und 6. Die Positionierung der Öffnung 3 kann jedoch auch in jedem anderen beliebigem Winkel Erfolgen.

Die Anpassung beziehungsweise Änderung der Stoßkraft kann in der erfindungsgemäßen Vorrichtung auf einfache Art und Weise durch Variation des Aktorhubs h erfolgen, das heißt, des maximalen Abstandes zwischen den Stirnflächen von Aktor und Gegenkörper.

Allgemein wird der Aktorhub h und damit die ausgeübte Stoßkraft über den Hebelarm r beziehungsweise den Hub l variiert. Je nach gewähltem Verhältnis von Aktorhub h zu Hebelarm r beziehungsweise maximalen Hub eines Linearantriebs l können unterschiedliche Fälle der Annäherung von Aktor und Gegenkörper und damit der Größe der übertragenen Stoß- bzw. Impulskraft unterschieden werden.

Ist h > 2 x r beziehungsweise h > l berühren sich Aktor und Gegenkörper nicht und es verbleibt ein gleichmäßiger Spalt zwischen Aktor und Gegenkörper. Die Stoß- beziehungsweise Impulsübertragung erfolgt hierbei durch Annäherung. Da die hierbei übertragene Kraft im Allgemeinen geringer ist, eignet sich diese Einstellung für niederviskose Medien.

Durch die erfindungsgemäß ermöglichte Variation des Aktorhubes beziehungsweise der Stoßkraft kann der zur Teilchenbildung benötigte mechanische Energieeintrag auf einfache Art und Weise an die jeweiligen Erfordernisse angepasst werden. Der benötigte mechanische Energieeintrag kann sich zum Beispiel aus den Stoffeigenschaften des Ausgangsmediums ergeben, wie der Viskosität, Oberflächenspannung, Dichte, oder aus der gewünschten Austrittsgeschwindigkeit der flüssigen Teilchen, beispielsweise um ein Zerplatzen bei Auftreffen auf die Oberfläche des Verfestigungsmediums V zu vermeiden oder ein Verstopfen der Austrittsöffnung zu beseitigen.

Eine weitere Möglichkeit zur Beeinflussung der Stoßkraft ist die Veränderung der Anschlagfläche des Aktors, das heißt der Fläche, mit der der Aktor auf den Gegenkörper oder den Flüssigkeitsfilm einwirkt. So kann die Stoßkraft, die punktuell auf den Gegenkörper übertragen wird, erhöht werden, indem die Anschlagfläche des Aktors verkleinert wird. Umgekehrtes gilt für eine Verringerung der Stoßkraft.

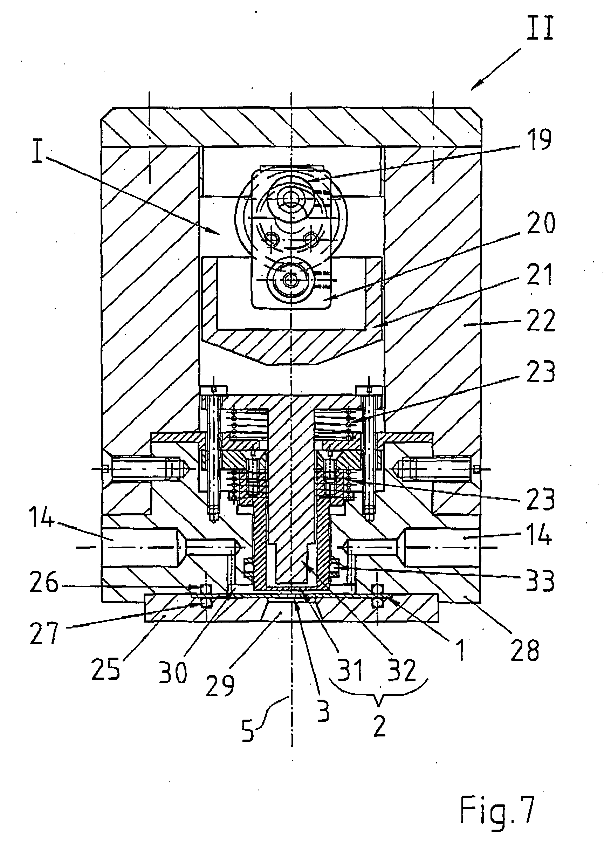

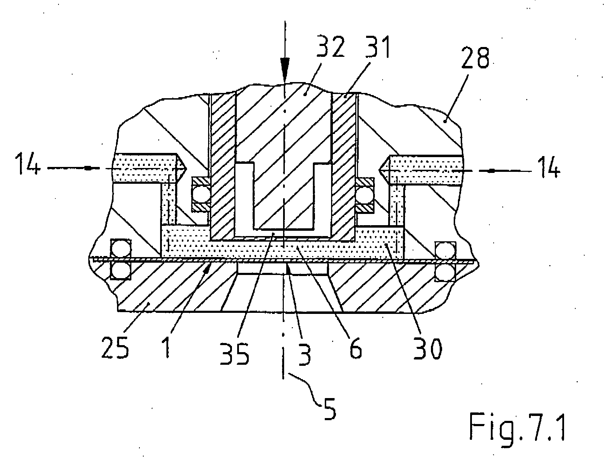

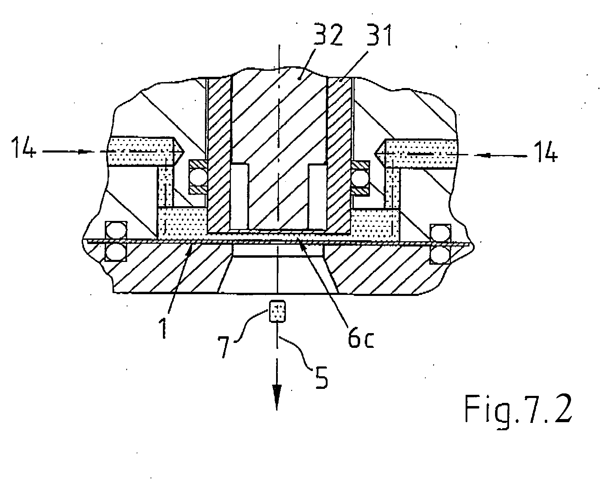

Ein Ausführungsbeispiel für eine erfindungsgemäße Vorrichtung mit Mikroteilchenextruder II mit drückender Stoßvorrichtung III zur Herstellung von einschichtigen Mikroteilchen ist in Figur 7 dargestellt. Der Stoßantrieb I dieser Ausführungsform erfolgt drückend unter Umsetzung einer Drehbewegung in eine lineare Bewegung wie sie in Figur 1 gezeigt ist.

Der Stoßantrieb I umfasst einen Motor (nicht gezeigt) verbunden mit einer Exzenterwelle 19, eine Exzenterkurbel 20 und ein Stoßelement 21, das hier als Führungskolben ausgeführt ist.

Hierbei überträgt die Exzenterwelle 19 das vom Motor erzeugte Drehmoment über eine Exzenterkurbel 20 auf das Stoßelement 21, das in dem Antriebsgehäuse 22 linear beweglich angeordnet ist. Das Stoßelement 21 bewegt sich innerhalb des Antriebsgehäuses in schneller Folge auf und ab und stößt bei jeder Abwärtsbewegung gegen einen ebenfalls beweglichen Antriebskolben 32, der hier gleichzeitig als Stoßaufnehmer wirkt und erzeugt damit einen geraden Stoß in Richtung der Stoßnormalen 5.

In der Ausführungsform gemäß Figur 7 bildet die Stoßmasse 2 den beweglichen Aktor und die Blende 1 wirkt als feststehender Gegenkörper. Die Stoßmasse 2 setzt sich zusammen aus einem zylindrischen Schlagkolben 31, in den der Antriebskolben 32 eingebracht ist. Der Antriebskolben 32 ist innerhalb des Schlagkolbens 31 frei beweglich angeordnet. Der Schlagkolben 31 selbst ist beweglich zum Beispiel über eine Dichtung 33 innerhalb des Extrudergehäuses 28 angeordnet.

Der Schlagkolben 31 wird mittels der Stellvorrichtung 23, hier einer Druckfeder, in einer bestimmten Höhe oberhalb der Blende 1 gehalten.

Weiter weist die Vorrichtung eine Befestigungsplatte 25 auf, mit deren Hilfe die Blende 1, vorzugsweise zwischen zwei Dichtungen (26, 27), an das Extrudergehäuse 28 geklemmt ist. Korrespondierend zur Öffnung 3 in der Blende 1, weist die Befestigungsplatte 25 ebenfalls eine hier konisch ausgestaltete Öffnung 29 auf, die hier breiter als die Öffnung 3 ist.

Wie hier gezeigt, kann die Vorrichtung über mehrere Zuleitungen 14 für das Ausgangsmedium verfügen. In der gezeigten Vorrichtung befinden sich jeweils eine Zuleitung 14 an gegenüberliegenden Seiten der Vorrichtung.

Der Flüssigkeitsfilm 6 wird zwischen der Bodenplatte des Kolbens 31 und der Blende 1 ausgebildet, wobei die Bodenplatte die Dicke des Flüssigkeitsfilms 6 begrenzt.

Der Ablauf des Verfahrens gemäß der in Figur 7 gezeigten Ausführungsform lässt sich allgemein durch drei Phasen beschreiben: Die erste Phase ist die Ausbildung eines Flüssigkeitsfilms 6 bei angehobenen Schlagkolben 31 und Antriebskolben 32, die zweite Phase ist die Übertragung eines geraden Stoßes von dem Antriebskolben 32 auf den Schlagkolben 31, indem der Antriebskolben 32 von oben gegen die Bodenplatte des Schlagkolbens 31 einen Stoß ausübt und die dritte Phase ist die Impulsübertragung durch den Schlagkolben 31 auf den Flüssigkeitsfilm 6 sowie die Blende 1, wobei die Kapillarflüssigkeit als flüssiges Teilchen 7 aus der Öffnung 3 ausgestoßen wird.

Alle drei Phasen werden in Abhängigkeit von der Bewegungsfrequenz des Antriebskolbens 32 und der Nachströmungsgeschwindigkeit des Ausgangsmediums über die Zuleitungen 14 wiederholt durchlaufen und bewirken somit den periodischen Ausstoß dosierter flüssiger Mikroteilchen 7.

Das Funktionsprinzip dieses Ausführungsbeispiels gemäß Figur 7 ist schematisch in den Figuren 7.1 und 7.2 dargestellt.

In Figur 7.1 ist die Vorrichtung gemäß Figur 7 in der ersten Phase mit angehobenen Schlagkolben 31 und Antriebskolben 32 gezeigt.

In dieser Phase erfolgt die Ausbildung des Flüssigkeitsfilms 6. Hierzu wird über eine Zuleitung 14 flüssiges Ausgangsmedium in einen Dosierraum 30 des Extruders II geleitet.

Der Schlagkolben 31 taucht in die Flüssigkeit ein und begrenzt somit den Flüssigkeitsfilm 6. Durch diese besondere bauliche Maßnahme zur Abgrenzung kann einerseits gewährleistet werden, dass sich immer ein gleichbleibend gleichmäßiger Flüssigkeitsfilm 6 durch das nachströmende Ausgangsmedium ausbilden kann.

Gleichzeitig bewirkt der Kolben 31 die Entkopplung des Antriebskolben 32 vom Flüssigkeitsfilm 6, da sich der Antriebskolben 32 ausschließlich In dem Luftraum 35 bewegt, der sich innerhalb des Kolbens 31 bei angehobenem Antriebskolben 32 ausbildet.

Das Verhältnis unmittelbar nach der Übertragung der Stoßkräfte auf die Stoßblende 1 sowie die Kapillarflüssigkeit in der Öffnung 3 ist in Figur 7.2 dargestellt.

Mit Bezug auf die Figur 1 können in Abhängigkeit von den Stoffeigenschaften des Ausgangsmediums unterschiedlich große Annäherungen des Schlagkolbens 31 und der Stoßblende 1 eingestellt werden.

In Figur 7.2 berühren sich Schlagkolben 31 und Stoßblende 1 nicht und es verbleibt ein gleichmäßiger Flüssigkeitsfilm 6c zwischen beiden erhalten. Diese Einstellung ist beispielsweise für niedrigviskose Ausgangsmedien vorteilhaft.

Die durch die Beschleunigung des Antriebskolben 32 und den anschließenden Stoß erzeugten Stoßkräfte werden auf die Blende 1 übertragen und damit gleichzeitig auf die innerhalb der Öffnung 3 befindlichen Kapillarflüssigkeit. In dieser Phase sind Schlagkolben 31 und Antriebskolben 32 miteinander verbunden. Die Kapillarflüssigkeit wird als separates flüssiges Mikroteilchen 7 vom Flüssigkeitsfilm 6 getrennt und hier in Richtung der Stoßnormalen 5 beschleunigt, um im Weiteren In einer Verfestigungsumgebung (V) zu einem verfestigten Mikroteilchen 8 zu werden.

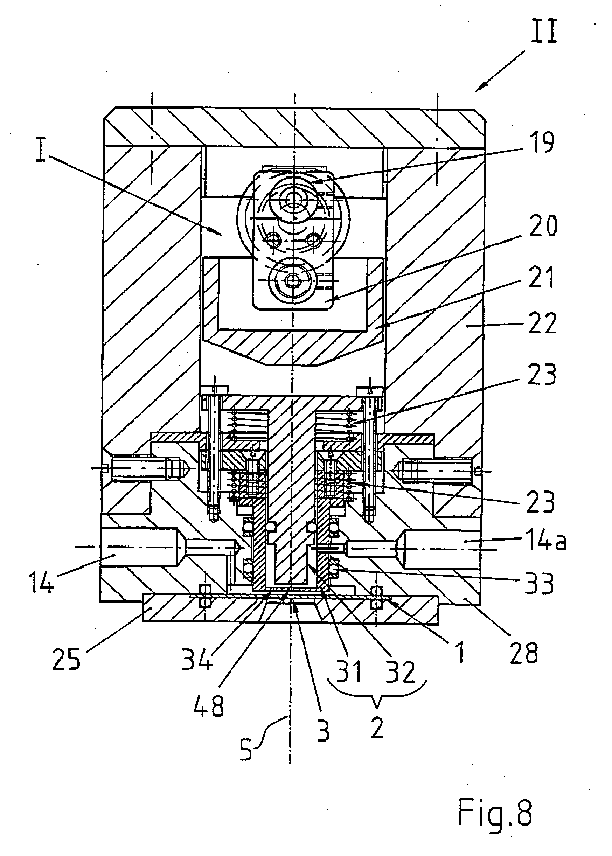

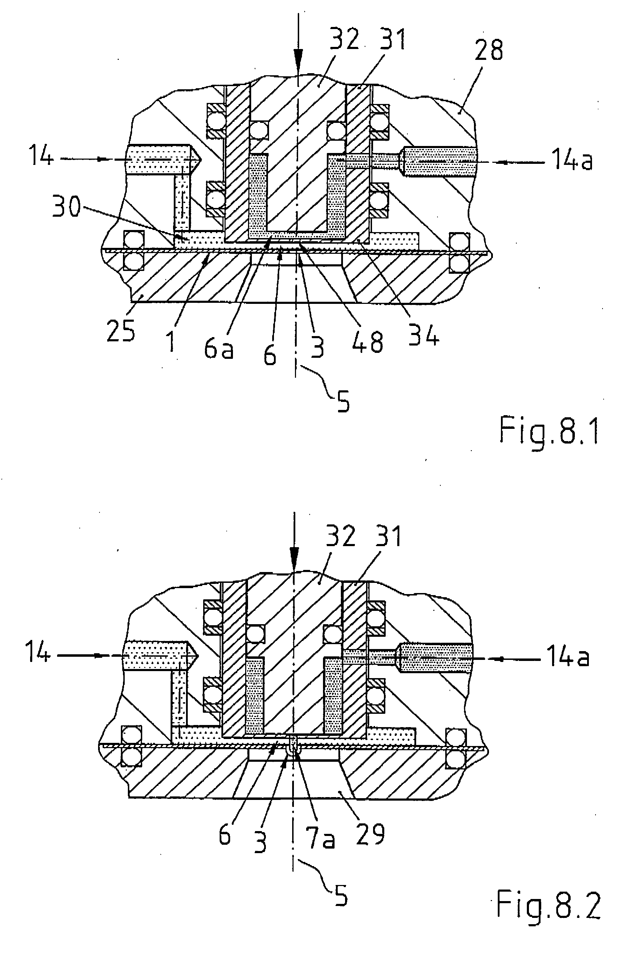

In Figur 8 ist eine weitere Ausführungsform für einen erfindungsgemäßen Mikroteilchenextruder II mit drückender Stoßvorrichtung III zur Herstellung von zweischichtigen Mikroteilchen dargestellt. Der Stoßantrieb I dieser Ausführungsform erfolgt drückend gemäß der Figur 1 gezeigten Darstellung. Das Funktionsprinzip dieser Ausführungsform ist in den Figuren 8.1 und 8.2 erläutert.

Der in Figur 8 gezeigte Mikroteilchenextruder kann durch geringfügige Abwandlung des in Figur 7 gezeigten Mikroteilchenextruders für einschichtige Mikroteilchen erhalten werden, indem in dem als ersten Aktor wirkenden zylindrischen hohlen Schlagkolben 31 Zuleitungen 14a für ein zweites Ausgangsmedium sowie in der Bodenplatte 34 des Schlagkolbens 31 mindestens eine Öffnung 48 vorgesehen werden. Die Bodenplatte 34 wirkt hier als weitere Blende zusätzlich zur Blende 1. Als Aktor wirken, wie in der Ausführungsform gemäß Figur 7, der zylindrische Schlagkolben 31 und der Antriebskolben 32.

Wie in Figur 8 prinzipiell gezeigt, sind in dieser speziellen Ausführungsform die mindestens eine Öffnung 3 in der Blende 1 und die mindestens eine Öffnung 48 in der Bodenplatte 34 in dem zylindrischen Schlagkolben 31 mittig übereinander angeordnet, wobei der Durchmesser der Öffnung 3 größer als der der Öffnung 48 ist.

In Figur 8.1 ist die Ausbildung der Flüssigkeitsfilme 6 und 6a bei angehobenem Antriebskolben 32 gezeigt. Über die Zuleitung 14a wird in den Hohlraum des Schlagkolbens 31 ein zusätzliches Ausgangsmedium unter Ausbildung eines Flüssigkeitsfilms 6a eingebracht.

In dieser Ausführungsform ist der Flüssigkeitsfilm 6 durch die Bodenplatte 34 des Schlagkolbens 31 und der Flüssigkeitsfilm 6a durch die Bodenfläche des Antriebskolben 32 im Schlagkolben 31 baulich begrenzt.

In Figur 8.2 sind die Verhältnisse unmittelbar nach der Übertragung der Stoßkräfte durch den Antriebskolben 32 auf den Schlagkolben 31 sowie auf die Kapillarflüssigkeit in der Öffnung 48 dargestellt. Durch den Stoß erfährt die Kapillarflüssigkeit In der Öffnung 48 eine Beschleunigung in Richtung der Stoßnormalen 5 und wird als Mikroteilchen 7a durch den darunterliegenden Flüssigkeitsfilm 6 unter Mitnahme einer zusätzlichen Schicht, bestehend aus Flüssigkeit des darunterliegenden Flüssigkeitsfilms 6, aus der Öffnung 3 gedrückt, wobei noch kein vollständiger Ausstoß stattfindet. Auf diese Weise wird ein Mikroteilchen 7a vorgebildet, das einen Kern aufweist, der von einer Schicht umhüllt ist.

Die einzelnen Phasen dieser Variante des erfindungsgemäßen Verfahrens mit Ausbildung der Flüssigkeitsfilme 6, 6a gemäß Figur 8.1 und anschließender Trennung unter Erzeugung des zweischichtigen Mikroteilchen 7 gemäß Figur 8.2, erfolgen in wechselnden periodischen Abständen, in Abhängigkeit von der gewählten Bewegungsfrequenz des als Aktor wirkenden Schlagkolbens 31 und Antriebskolben 32 und der gewählten Nachströmgeschwindigkeit der Flüssigkeiten über die Zuleitungen 14. 14a.

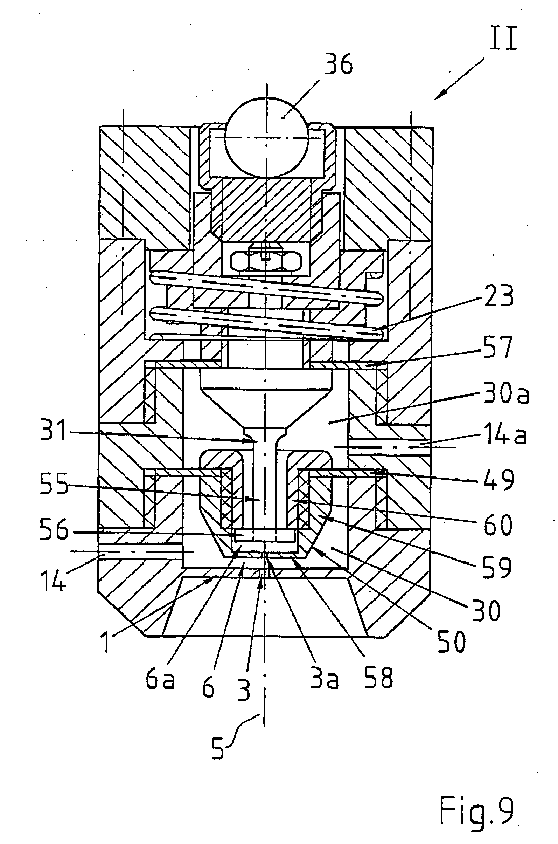

Figur 9 zeigt den Querschnitt durch eine weitere besonders bevorzugte Ausgestaltung der erfindungsgemäßen Vorrichtung mit drückender Arbeitsweise. Die Vorrichtung gemäß Figur 9 ist speziell für die Herstellung von Teilchen mit Kern und Hülle konzipiert.

Die mechanischen Impulse beziehungsweise Stöße werden von einem hier nicht dargestellten, separaten Stoßantrieb I erzeugt und über den Stoßaufnehmer 36 mit Stellvorrichtung 23 über die als Aktor wirkenden Bauteile auf die Flüssigkeitsfilme 6, 6a übertragen.

Der Stoßaufnehmer kann, wie hier gezeigt, eine Kugel sein. Als Stoßaufnehmer kann jedoch auch ein beliebig gestaltetes Bauteil eingesetzt werden, das zur Stoßaufnahme und Stoßübertragung geeignet ist.

Die Vorrichtung weist eine untere Dosierkammer 30 und eine obere Dosierkammer 30a auf, die durch eine bewegliche Membran 49 mit festem Mittelteil 50 voneinander getrennt sind. Das feste Mittelteil 50 zeigt hier die Form eines zur zweiten Dosierkammer 30a hin offenen Zylinders auf, in den ein als Aktor wirkender Kolben 31 hineinragt.

Als Membran 49 können zum Beispiel ein Flachmembran, Sickenformmembran, Tellerformmembran oder Rollmembran eingesetzt werden. Die Membran 49 ist mit dem festen Mittelteil 50 fest verbunden. Hierzu kann sie an dieses anvulkanisiert sein.

Die Membran 49 kann aus einem beliebigen Material gefertigt sein, sofern die gewünschte Beweglichkeit beziehungsweise Dehnbarkeit gewährleistet ist, Sie kann aus einem flexiblen anorganischen oder organischen Material hergestellt sein.

Der obere zweite Dosierraum 30a ist nach oben gegenüber dem Extrudergehäuse abgeschlossen, zum Beispiel mit einer Dichtung 57 abgedichtet, die wie hier gezeigt vorzugsweise ebenfalls eine Membran sein kann. Beide Dosierkammem 30, 30a verfügen über Zuleitungen 14, 14a zur Beschickung mit Ausgangsmedium.

Der Kolben 31 setzt sich zusammen aus einem Kolbenschaft 55 und einer Schlagfläche 56. Der Durchmesser der Schlagfläche 56 ist hierbei annähernd so groß wie der innere Durchmesser des zylinderförmigen Mittelteils 50. Der Kolbenschaft 55 hat vorzugsweise wie in der Figur 9 gezeigt einen geringeren Durchmesser als die Schlagfläche 56.

Die Schlagfläche 56 weist in ihrer Peripherie Durchbohrungen (hier nicht gezeigt) auf, durch die die Dosierkammer 30a mit der Oberfläche der Bodenplatte 58 des zylinderförmigen Mittelteils 50 in Verbindung steht. Die Bodenplatte 58 selbst weist zudem mindestens eine Öffnung 3a auf, die vorzugsweise mittig oberhalb der mindestens einen Öffnung 3 einer Stoßblende 1 angeordnet ist.

Wenn flüssiges Ausgangsmedium in die obere Dosierkammer 30a geleitet wird, füllt sich die obere Dosierkammer 30a mit dem Ausgangsmedium, das über die Durchbohrungen in der Schlagfläche 56 des Kolbens 31 die Bodenplatte 58 des zylinderförmigen Mittelteils 50 erreicht und dort einen Flüssigkeitsfilm 6a ausbildet. Die Stärke des Flüssigkeitsfilms 6a kann je nach Höhe des Aktorhubs des Kolbens 31, das heißt je nach Abstand der Unterseite der Schlagfläche 56 zur Bodenplatte 58, eingestellt werden. In dieser Ausführungsform wirkt die Bodenplatte 58 des Mittelteils 50 als weitere Blende.

Wie in den vorhergehenden Ausführungsformen kann der Aktorhub auf beliebige geeignete Weise bewirkt werden, zum Beispiel mechanisch durch eine Stellvorrichtung 23 und/oder durch die Druckkraft des sich ausbildenden Flüssigkeitsfilms 6a. Als Stellvorrichtung 23 kann wiederum eine Druckfeder eingesetzt werden.

Entsprechend bildet sich bei Füllung der unteren Dosierkammer 30 mit flüssigem Ausgangsmedium zwischen der Oberfläche der Stoßblende 1 und der Unterfläche der Bodenplatte 58 des zylinderförmigen Mittelteils 50 ein Flüssigkeitsfilm 6.

In der in Figur 9 gezeigten Ausführungsform wird die Abgrenzung der Flüssigkeitsfilme 6, 6a durch die Unterseite der Bodenplatte 58 des zylinderförmigen Mittelteils 50 und der Oberseite der Stoßblende 1 (Flüssigkeitsfilm 6) sowie der Unterseite der Schlagfläche 56 des Kolbens 31 und der Oberseite der Bodenplatte 58 des zylinderförmigen Mittelteils 50 (Flüssigkeitsfilm 6a) gebildet.

Zur Ausbildung der flüssigen Teilchen schlägt der Kolben 31 gegen die Bodenplatte 58, wobei Kapillarflüssigkeit aus der Öffnung 3a der Bodenplatte 58 herausgedrückt wird, das herausgedrückte Flüssigkeitsvolumen den Flüssigkeitsfilm 6 unter Mitnahme von Flüssigkeit als äußere Hülle passiert und zur Öffnung 3 gelangt.

Die gemäß dieser Ausführungsform durchlaufenen Phasen der Ausbildung der Flüssigkeitsfilme sowie Bildung und Ausstoß des flüssigen Teilchens mit Kern und Hülle entsprechen dabei den Phasen wie sie in Bezug auf die Figuren 8.1 und 8.2 beschrieben worden sind.

Wie in Figur 9 gezeigt, kann der Aktorhub des Kolbens 31 durch entsprechend angebrachte Vorsprünge in der Innenwand des zylinderförmigen Mittelteils 50 nach oben begrenzt werden, mit denen der Innendurchmesser des zylinderförmigen Mittelteils 50 geringer als der Durchmesser der Schlagfläche 56 des Kolbens 31 gemacht wird, so das die Schlagfläche 56 von unten gegen diesen Vorsprung gedrückt wird.

Durch diese Ausgestaltung wird nicht nur eine Begrenzung des Aktorhubs und damit der Dicke des Flüssigkeitsfilms 6a bewirkt, sondern gleichzeitig wird in vorteilhafter Weise der Bereich, in dem sich der Flüssigkeitsfilm 6a ausbildet gegenüber der übrigen Dosierkammer 30a abgedichtet, so dass eine optimale Stoßübertragung möglich ist.

Die Anbringung und Befestigung der Ränder der Membran 49 sowie der als Dichtung 57 eingesetzten Membran kann an sich beliebig gewählt werden.

Wie in Fig. 9 gezeigt, kann das zylinderförmige feste Mittelteil 50 aus mehreren Bauteilen, hier zwei, zusammengesetzt sein. Die Verbindung der beiden Bauteile 59, 60 erfolgt vorzugsweise durch Verschraubung, wobei die Verschraubung gleichzeitig unter Festklemmen der Membran erfolgt.

In der Figur 9 sind diese beiden Bauteile 59, 60 durch unterschiedlich orientierte Schraffuren angedeutet, wobei das Schraubgewinde durch die Überschneidung dieser Linien angedeutet ist.

Das Mittelteil 50 umfasst dabei ein erstes zylinderförmiges Bauteil 59, dessen Seitenwände unterhalb der Membran enden und das die Bodenplatte 58 bildet. Auf der Innenseite des ersten Bauteils 59 befindet sich vorzugsweise im oberen Bereich ein Gewinde. In dieses Gewinde wird ein zweites rohrförmiges Bauteil 60 eingeschraubt, das im oberen Bereich einen überkragenden Rand aufweist. Im eingeschraubten Zustand bildet das untere Ende dieses rohrförmigen zweiten Bauteils 60 den vorspringenden Absatz, gegen den die Schlagfläche 56 in angehobenem Zustand des Kolbens 31 gedrückt wird.

Das überkragende obere Ende dient zum Festklemmen der Membran. In dieser Ausführungsform wird die Membran 49 somit zwischen den oberen Rand des zylinderförmigen ersten Bauteils und dem überkragenden oberen Rand des rohrförmigen zweiten Bauteils eingeklemmt.

Die Vorrichtung gemäß Figur 9 kann durch Einsetzen eines Mittelteils 50 ohne Öffnung 3a, ebenfalls in eine Vorrichtung zur Herstellung von einschichtigen Mikroteilchen umgebaut werden.

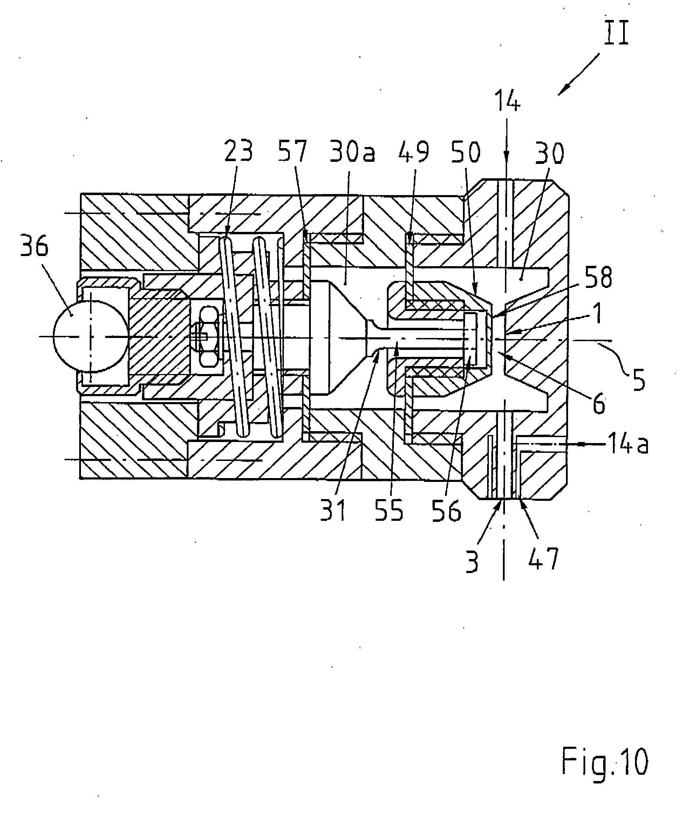

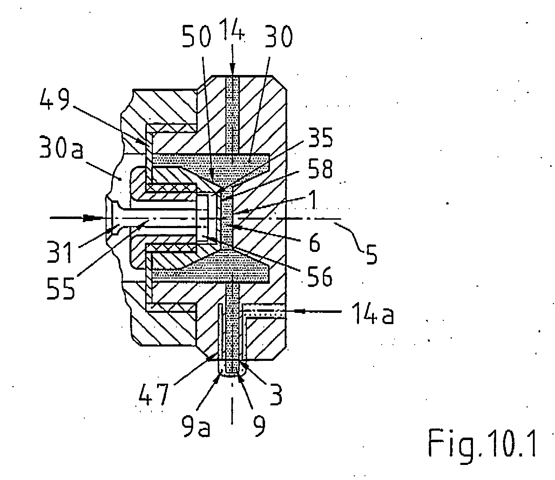

Bei dem in Figur 10 gezeigten Ausführungsbeispiel handelt es sich um einen Mikroteilchenextruder II für mehrschichtige Teilchen. Der Stoßantrieb I erfolgt drückend.

Der Aufbau der in Figur 10 dargestellten Vorrichtung stimmt prinzipleil mit dem der in Figur 9 dargestellten und zuvor beschriebenen Ausführungsform überein, so dass im Folgenden nur noch auf die Unterschiede der hier gezeigten Ausführungsform eingegangen wird. In dem in Figur 10 dargestellten Ausführungsbeispiel erfolgt der Teilchenanstoß in einem 90° Winkel im Vergleich zu dem in Figur 9 gezeigten Ausführungsbeispiel. Der wesentliche Unterschied liegt in der Anordnung der Zuleitungen für das Ausgangsmedium 14, 14a sowie der Lage der Öffnung 3.

Die Öffnung 3 ist in einem Winkel von 90° zur Stoßnormalen 5 positioniert. Ihr gegenüber liegt die Zuleitung 14 für die Dosierkammer 30. Eine zusätzliche Öffnung 47 umgibt als Ringspalt die als zylinderförmige Kapillare ausgeführte Öffnung 3 und ist mit einer Zuleitung 14a verbunden. Die Dosierkammer 30a stellt hier nur den Freiraum für den als Aktor wirkenden Kolben 31 dar. Des Weiteren ist im Gegensatz zur Figur 9 die Bodenplatte des zylinderförmigen festen Mittelteils 50 sowie die gegenüber angeordnete Stoßblende 1 ohne Öffnung ausgeführt.

Figur 10.1 zeigt die Phase der Herstellung der Mikroteilchen. Der Ablauf des Verfahrens gemäß der in Figur 10 gezeigten Ausführungsform lässt sich allgemein durch -sich periodisch wiederholende- Phasen beschreiben: Die erste Phase ist die Ausbildung eines Flüssigkeitsfilms 6 bei angehobenen Aktoren umfassend Schlagkolben 31 und Mittelteil 50, die zweite Phase ist die Übertragung eines geraden Stoßes von dem Schlagkolben 31 auf das Mittelteil 50 durch Verbindung der beiden Aktoren und die Stoßübertragung von dem festen Mittelteil 50 auf den Flüssigkeitsfilm 6, wobei die aus den Öffnungen 3, 47 austretenden Kapillarflüssigkeiten 9, 9a durch die Stoßübertragung eine Störung parallel zur Richtung der Stoßnormalen erfahren und als flüssige Teilchen 7 portioniert werden.

Mit Bezug auf die Figuren 5 und 6 können in Abhängigkeit von den Stoffeigenschaften der Ausgangsmedien wiederum unterschiedliche Annäherungen des als Aktor ausgeführten festen Mittelteils 50 und des Gegenkörpers, hier Stoßblende 1, eingestellt werden.

Die vorstehend gezeigten konkreten konstruktiven Ausgestaltungen dienen der Erläuterung des erfindungsgemäßen Prinzips für ein Verfahren zur Herstellung von Mikroteilchen beziehungsweise eine Vorrichtung hierfür, wobei die Erfindung nicht auf diese konkreten Ausführungsformen beschränkt ist sondern beliebige Ausgestaltungen und Abwandlungen hiervon mit umfasst sind. So sind alle Ausführungen und Ausgestaltungen für einschichtige Mikroteilchen auch für mehrschichtige Mikroteilchen gültig.

So kann die Form, Anordnung und Anzahl der Öffnungen 3, 3a, 48 für den Teilchenausstoß je nach Bedarf variiert werden.

Der Durchmesser der Öffnungen richtet sich im Allgemeinen nach dem gewünschten Durchmesser der auszubildenden festen Teilchen 8. Üblicherweise wird der Durchmesser der Öffnungen etwas größer gewählt als der Durchmesser der auszubildenden Teilchen 8. Ein geeignetes Verhältnis von Öffnungsdurchmesser zum Durchmesser der Teilchen ist ca. 0,6 -0,7. Geeignete Durchmesser für Öffnungen liegen in einem Bereich von etwa 0,1 mm bis 3,5 mm für Teilchendurchmesser von etwa 0,15 mm bis etwa 6 mm, Je nach Bedarf kann der Durchmesser der Öffnungen jedoch variiert werden.

Die Öffnungen können sich in einer Blende befinden wie in den Ausführungsformen gemäß Figuren 1-4 und 7-9 dargestellt, oder die Öffnung können in einem beliebigen Winkel zur Stoßnormalen angeordnet sein wie in Figuren 5, 6 und 10 gezeigt, sie könne zentrisch oder in einem 90° Winkel zur Stoßnormalen angeordnet sein.

Zur Herstellung mehrschichtiger Teilchen können zwei und mehr Blenden oder als Blenden wirkende Bauteile mit Öffnungen für den Teilchenausstoß übereinander angeordnet sein wie in Figuren 8 und 9 gezeigt.

Die Schlagfläche der als Aktor wirkenden Bauteile kann in Größe und Form je nach Bedarf gewählt werden. Beispielsweise kann ein konisch zulaufender Kolben mit abgeflachter Spitze gewählt werden.

Als Stellvorrichtung 23 kann ein elastisches beziehungsweise biegsames Bauteil eingesetzt werden. Beispiele hierfür sind Federn oder biegsame Membranen, Dichtungen etc. Die Membranen können zum Beispiel mit Druckluft beaufschlagt sein. Je nach Bedarf kann die Vorrichtung auch zwei und mehr Steilvorrichtungen umfassen.

Ein Mikroteilchenextruder kann eine oder mehrere Stoßvorrichtungen aufweisen. Die Durchsatzleistung ergibt sich aus der Anzahl an eingesetzten Stoßvorrichtungen sowie der Anzahl der Öffnungen in der oder den Stoßblenden. Die Ausrichtung und/oder der Abstand der Mikroteilchenextruder II beziehungsweise der Stoßvorrichtungen III bezüglich des Verfestigungsmediums V kann beliebig je nach Bedarf gewählt werden.

Näherungsweise können mit einer einzigen erfindungsgemäßen Stoßvorrichtung mit nur einer Öffnung in der Stoßblende 1, Teilchen mit einem Durchmesser von beispielsweise 150 $\mu$m bis 6000 $\mu$m bei Durchsatzleistungen von 1 l/h bis 40 l/h erzielt werden.

Für einen entsprechenden Mikroteilchenextruder mit einem Durchmesser von 100 mm und 5 Blendenöffnungen lässt sich entsprechend eine Durchsatzleistung von ca. 1 l/h bis 800 l/h beziehungsweise bei 40 Mikroteilchenextrudern auf einer Grundfläche von 1 m$^2$ von 40 l/h bis 32.000 l/h kalkulieren.

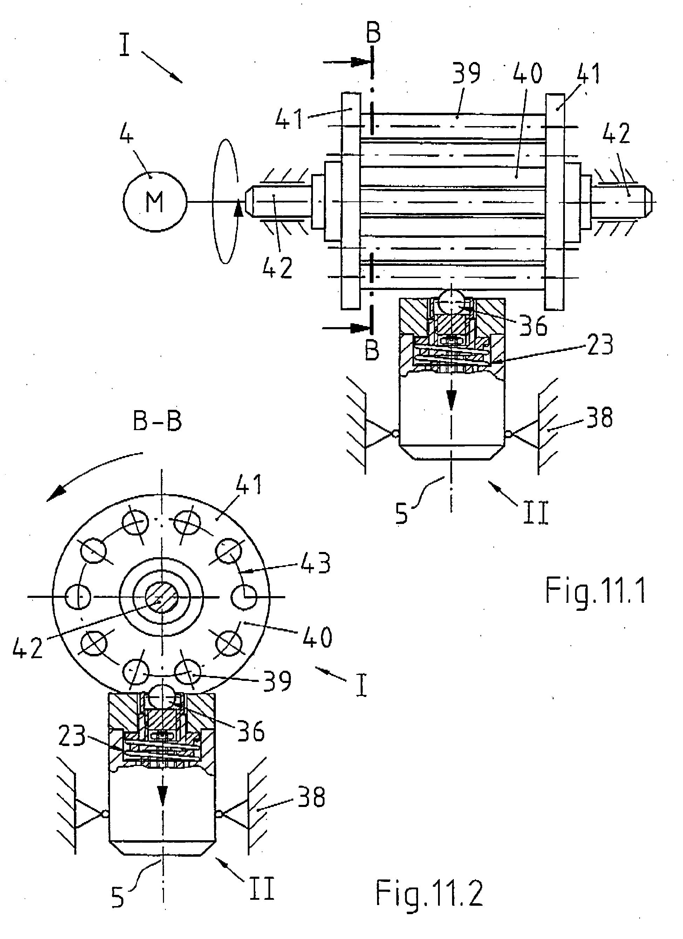

Figuren 11.1 bis 12.2 zeigen schematisch unterschiedlich ausgeführte erfindungsgemäß einsetzbare Stoßantriebe I zur Erzeugung hochfrequenter Stöße. Diese Stoßantriebe eignen sich insbesondere für die in Figur 9 und 10 dargestellten Mikroteilchenextruder II, können aber auch für andere Ausführungsformen eingesetzt werden.

Zur Erzeugung hochfrequenter Stöße enthalten diese Stoßantriebe eine Vielzahl von Stoßelementen 39 zur Übertragung von Stößen auf den Mikroteilchenextruder II.

In den Figuren 11.1 und 11.2 ist ein Ausführungsbeispiel für einen erfindungsgemäß einsetzbaren Stoßantrieb I dargestellt. Die Stoßelemente 39 sind hierbei als zylindrische Bauteile, zum Beispiel als Rollen ausgeführt. Die Enden der Stoßelemente 39 befinden sich zwischen 2 Antriebsscheiben 41 und können fixiert oder beweglich eingesetzt sein. Zwischen den jeweiligen Stoßelementen 39 befinden sich Freiräume 40, sodass sich eine Anordnung in Wechselfolge von Stoßelement 39 und Freiraum 40 ergibt. Die Antriebsscheiben 41 sind mit einer Antriebswelle 42 verbunden. Die Antriebswelle 42 ist zum Beispiel in einem Gehäuse drehbar gelagert und mit einem Motor 4 verbunden.

Der Mikroteilchenextruder II ist bei dieser Ausführung mittig unterhalb der Antriebswelle 42 sowie in einem bestimmten Abstand zur Kreisbahn 43 der Stoßelemente 39 vorteilhafterweise in einer Halterung 38 fest fixiert angeordnet.

Zur Aufnahme bzw. Übertragung der Stöße bzw. Impulse und Umsetzung der Stöße beziehungsweise Impulse in eine lineare Bewegungsrichtung dient der Stoßaufnehmer 36 des Mikroteilchenextruders.

Der Stoßaufnehmer 36 ist ein bewegliches Element. Beispielsweise kann er als eine bewegliche in einer Hülse gelagerte Kugel oder Rolle ausgeführt sein .

Bei Betrieb -wie in den Fig. 11.1 und 11.2 dargestellt- versetzt der Motor 4 die Antriebswelle 42 und somit die Stoßelemente 39 in Drehung. Durch Drehung der Stoßelemente 39 um die Achse der Antriebswelle 42 gelangen diese nun nacheinander gegen den Stoßaufnehmer 36.

Der Stoßaufnehmer 36 weicht dem Stoßelement 39 in linearer Richtung nach unten hin aus und überträgt somit einen geraden Stoß entlang der Stoßnormalen 5, der gemäß der vorab beschriebenen Ausführungen über weitere als Aktoren ausgeführte Bauteile auf ein oder mehrere Flüssigkeitsfilme übertragen wird.

Durch den nachfolgenden Freiraum 40 wird der Stoßaufnehmer 32 durch die vorab gespannte Stellvorrichtung 23 in seine Ursprungslage vor dem Stoß zurückgesetzt. Der ganze Vorgang wiederholt sich in schneller Wechselfolge.

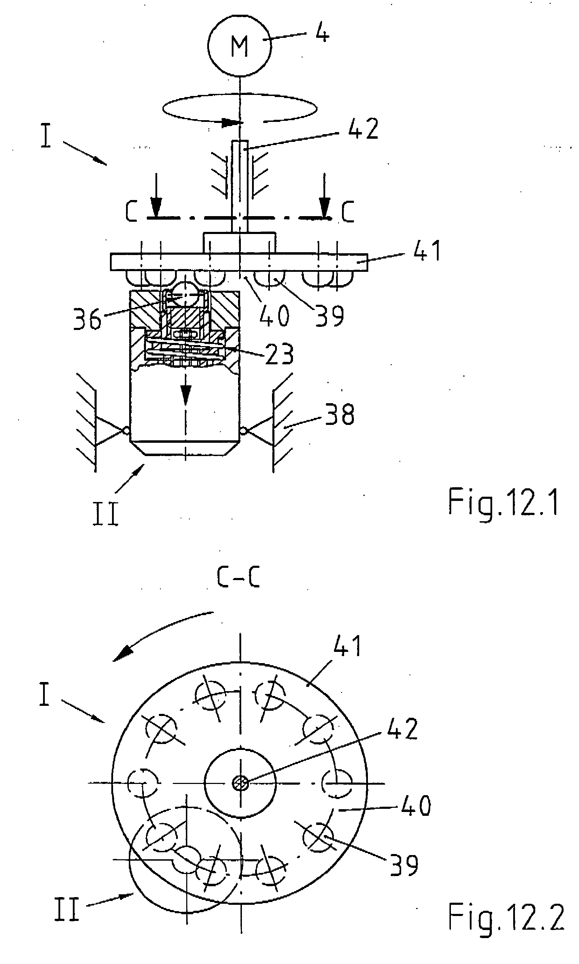

In den Figuren 12.1 und 12.2 ist ein zweites Ausführungsbeispiel eines erfindungsgemäß einsetzbaren Stoßantriebes (I) gezeigt.

Die Stoßelemente 39 - hier als zylindrische Bauteile ausgeführt - werden in Richtung der Achse des Mikroteilchenextruders (II) sowie in gleichem Abstand um die Achse einer Antriebswelle 42 angeordnet. Die Stoßelemente 39 werden auf einer Antriebsscheibe 41 fixiert oder zum Beispiel als Kugeln beweglich eingesetzt. Der Mikroteilchenextruder befindet sich wiederum unterhalb der Stoßelemente 39, zum Beispiel in einer Halterung 38 fest fixiert angeordnet. Der Motor 4 versetzt die Antriebswelle 42 mit der Antriebsscheibe 41 und den Stoßelementen 39 in Drehung und bewirkt aufgrund der Wechselfolge von Stoßelement 39 und Freiraum 40 eine gerade Stoßübertragung über den Stoßaufnehmer 36 des Mikroteilchenextruders II.

Mit einem Motor kann - unter Beibehaltung des für den Kraftstoß erforderlichen Drehmomentes - nur eine maximale Drehzahl eingestellt werden.

Antriebe mit nur einem Stoßelement 39, zum Beispiel einem Führungskolben 21 wie in der Ausführungsform gemäß Fig 7, können demnach eine maximale Kraftstoßfrequenz erzeugen, die der maximalen Motordrehzahl entspricht.

Kraftstoßfrequenz [Hz] = maximale Motordrehzahl [$S^{-1}$]

Mit dem Stoßantrieb mit einer Vielzahl von Stoßelementen 39, lassen sich jedoch wesentlich höhere Kraftstoßfrequenzen in Abhängigkeit von der gewählten Anzahl "k" der Stoßelemente 39 erzeugen.

$$\text{Kraftstoßfrequenz [Hz]} \; = \; k \; \times \; (\text{maximale Motordrehzahl } [s^{-1}])$$

Beispielsweise kann über einen Motor mit einer maximalen Drehzahl von 72.000 min$^{-1}$ (= 1.200 s$^{-1}$) als Antrieb einer erfindungsgemäßen Vorrichtung mit k = 10 Stoßelementen eine lineare Kraftstoß- bzw. Impulsfrequenz von 12.000 Hz erzeugt werden.

Da die Kraftstoßfrequenz mit der Anzahl der pro Zeiteinheit vom Flüssigkeitsfilm getrennten Flüssigkeitsvolumina korrespondiert, können mit einer erfindungsgemäßen Stoßvorrichtung (III) in dieser Einstellung ca. 12.000 Stück. Mikroteilchen pro Sekunde hergestellt werden.

Prinzipiell kann die Kraftübertragung vom Antrieb auf die Vorrichtung, insbesondere vom Stoßelement auf den Stoßaufnehmer, beliebig erfolgen, zum Beispiel auch durch magnetische Kraftwirkung wie anziehender oder abstoßender magnetischer Kraftwirkung. Im Falle von zum Beispiel abstoßender magnetischer Kraftwirkung berühren sich Stoßelement und Stoßaufnehmer nicht.

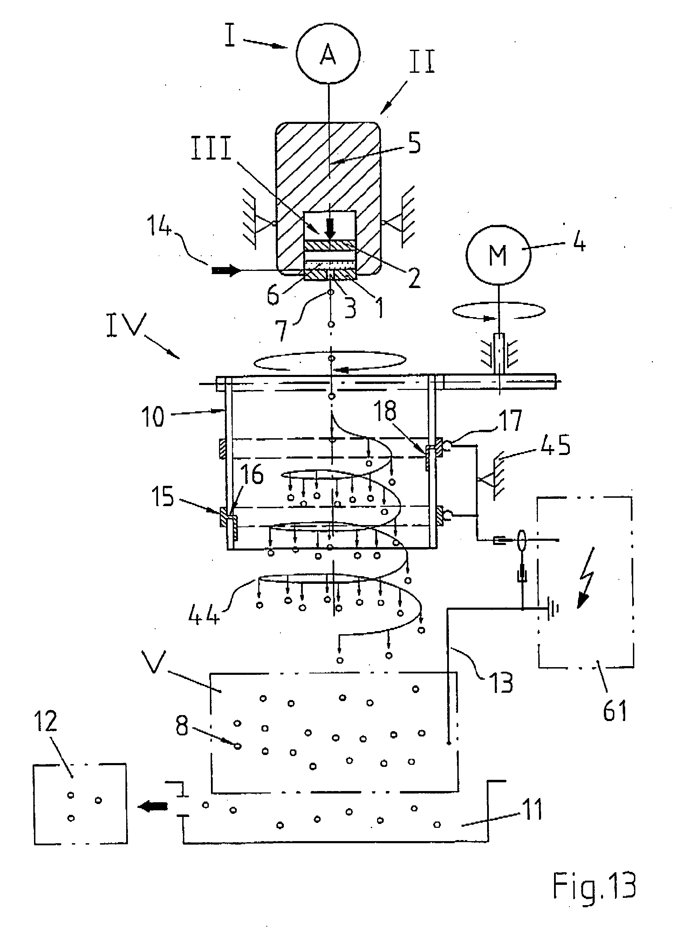

Figur 13 zeigt schematisch eine erfindungsgemäße Vorrichtung mit einem Mikroteilchenextruder II mit einer Stoßvorrichtung III, einem Stoßantrieb I und einer Zuleitung 14 für das Ausgangsmedium.

Die gebildeten flüssigen Mikroteilchen 7 verlassen in der hier gezeigten Ausführungsform die Öffnung 3 in Richtung der Stoßnormalen 5 und bewegen sich linear in Richtung einer die Verfestigung bewirkenden Umgebung V. Setzen die Teilchen 7 nach Verlassen der Öffnung 3 den Flug in linearer Richtung fort, können sich aufgrund unterschiedlicher Fallgeschwindigkeiten der Mikroteilchen 7 einzelne Mikroteilchen 7 zu größeren Teilchen verbinden und damit zu einer breiten Größenverteilung der festen Mikroteilchen 8 führen.

Erfindungsgemäß wird eine unerwünschte Koaleszenz der flüssigen Teilchen 7 vermieden, indem die Teilchen 7 auf eine spiralförmige Flugbahn 44 gebracht werden.

Dies ist insbesondere vorteilhaft bei den Stoßantrieben gemäß Figuren 11.1 bis 12.2 beziehungsweise bei Anwendung höherer Stoßfrequenzen ab 100 Hz bis 12.000 Hz zur Bildung einer monodispersen Teilchengrößenverteilung.

Wie in einem Ausführungsbeispiel in Figur 13 dargestellt und im Folgenden näher beschrieben, werden erfindungsgemäß zur Vermeidung der Verbindung einzelner Mikroteilchen 7 zu größeren Teilchen, die Mikroteilchen 7 auf einer Spiralbahn 44 in Richtung der die Verfestigung bewirkenden Umgebung V geführt. Die Erzeugung einer Spiralbahn 44 für die Teilchen kann zum Beispiel durch eine unterhalb des Mikroteilchenextruders II angeordnete Hochspannungsvorrichtung IV erfolgen.

Dazu wird unterhalb des Mikroteilchenextruders ein als Hohlzylinder 10 ausgeführtes Bauteil angeordnet, das zumindest auf der Seite des Teilchenseintritts offen ist. Der Hohlzylinder 10 kann um seine Längsachse über einen Motor 4 in Drehung versetzt werden. Der Hohlzylinder 10 ist als elektrischer Isolator ausgeführt. Ein elektrisch leitender Schleifring 15 umgibt die äußere Mantelfläche des Hohlzylinders 10 und ist mit dieser fest verbunden. Der Schleifring 15 ist über eine lose aufliegende Schleifbürste 17 mit einem Hochspannungserzeuger 61 leitend verbunden. Bei Drehung des Holzylinders 10 mit Schleifring 15 um die Längsachse des Hohlzylinders 10 sollte immer eine leitende Verbindung zwischen Schleifbürste 17 und damit zwischen Hochspannungserzeuger 61 und Schleifring 15 bestehen bleiben. Hiefür kann die Schleifbürste 17 zur Fixierung ihrer Lage außerhalb des Hohlzylinders 10 an einer Halterung 45 befestigt sein.

Die Verbindung des äußeren Schleifrings 15 zur inneren Mantelfläche des Hohlzylinders 10 wird über eine Verbindungsleitung 16 realisiert, die wiederum mit einer Hochspannungselektrode 18 verbunden ist. Vorzugsweise bildet das Ende der Verbindungsleitung 16 gleichzeitig die Hochspannungselektrode 18. Dazu kann ein Endstück der Verbindungsleitung 16 in Richtung der Längsachse des Hohlzylinders 10 nach unten hin abgebogen und an der inneren Mantelfläche des Hohlzylinders 10 fixiert werden.

Bei Drehung des Hohlzylinders 10 um die Längsachse werden somit auch der Schleifring 15 sowie die Hochspannungselektrode 18 in Drehung versetzt.

Die Schleifbürste 17 steht fest und liegt auf dem Schleifring 15.

Der Hohlzylinder 10 kann mit einer Vielzahl von Schleifringen 15 und Hochspannungselektroden 18 bestückt werden, die ebenfalls mit dem Hochspannungserzeuger 61 elektrisch leitend verbunden sind. Ebenso kann die Anzahl der Schleifbürsten 17 nach Bedarf variieren.

In Figur 13 sind beispielhaft je zwei Hochspannungselektroden 18 an gegenüberliegenden Seiten gezeigt. Die Erdung erfolgt über eine Erdungsleitung 13 - hier zum Beispiel mit der Verfestigungsumgebung V. Beispielsweise lassen sich mit dem Hochspannungserzeuger 61 die elektrischen Spannungen stufenlos zwischen 0 und 100 KV bei einer maximalen Stromstärke von 0,2 mA an die jeweiligen Bedingungen anpassen.

Im Betrieb dreht sich der Hohlzylinder 10 vorzugsweise gleichmäßig um seine Längsachse. Die Drehzahl kann über den Motor 4 eingestellt werden. Gleichzeitig wird über die feststehenden Schleifbürsten 17 über die mitdrehenden Schleifringe 15 und die Verbindungsleitungen 16 eine elektrische Ladung auf die mitbewegten Hochspannungselektroden 18 übertragen. Die elektrische Ladung wird nur auf der Außenfläche der Hochspannungselektroden 18 influenziert, die durch Ihre Drehung um die Längsachse des Hohlzylinders 10 zusätzlich ihre Position gemäß der gewählten Drehzahl ändern.

Die Mikroteilchen 7 fallen durch das Innere des drehenden Hohlzylinders 10. Die Dipolmoleküle der im Allgemeinen aus wässrigen Flüssigkeiten bestehenden Mikroteilchen 7 erfahren eine polgerechte Ausrichtung und Ablenkung aufgrund der je nach Ladung vorliegenden Anziehung und Ablenkung der Teilchen 7 in Bezug auf die um die Längsachse des Hohlzylinders 10 drehenden Hochspannungselektroden 18, d.h. der entsprechend entlang einer Gerade nach unten gerichteten Fortbewegung der Mikroteilchen 7 wird somit eine zusätzliche Bewegung in einem bestimmten Abstand um die Längsachse des Hohlzylinders 10 überlagert und ergibt somit die resultierende Gesamtbewegung der Teilchen 7 auf einer Spiralbahn 44 in Richtung des Verfestigungsmediums V.

Die hierbei in monodisperser Größenverteilung gebildeten festen Mikroteilchen 8 können in einer Vorrichtung 11 gesammelt und/oder über geeignete Förderkomponenten kontinuierlich der weiteren Verarbeitung 12 - beispielsweise einer Spülung oder einer sterilen Abfüllung - zugeführt werden.

Zur magnetischen Übertragung des Impulses kann entweder das mindestens eine Stoßelement 39 des Stoßantriebs und/oder ein Stoßaufnehmer 36 des Mikroteilchenextruders ganz oder zumindest teilweise aus einem magnetischen Material, insbesondere einem ferromagnetischen Material, gebildet sein.


**Bezugszeichenliste**

I      Stoßantrieb
II     Mikroteilchenextruder
III    Stoßvorrichtung
IV     Hochspannungsvorrichtung
V      Verfestigungsumgebung

1        Stoßblende
2        Stoßmasse
3, 3a    Öffnung
4        Motor
5        Stoßnormale
6, 6a, 6c   Flüssigkeitsfilm
7, 7a    flüssiges Teilchen
8        verfestigtes Teilchen
9, 9a    Kapillarflüssigkeit
10       Hohlzylinder

| 11 | Sammelvorrichtung |
|---|---|
| 12 | weitere Verarbeitung |
| 13 | Erdungsleitung |
| 14, 14a | Zuleitung für Ausgangsmedium |
| 15 | Schleifring |
| 16 | Verbindungsleitung |
| 17 | Schleifbürste |
| 18 | Hochspannungselektrode |
| 19 | Exzenterwelle |
| 20 | Exzenterkurbel |
| 21 | Führungskolben |
| 22 | Antriebsgehäuse |
| 23 | Stellvorrichtung |
| 24 | |
| 25 | Befestigungsplatte |
| 26 | Dichtung |
| 27 | Dichtung |
| 28 | Extrudergehäuse |
| 29 | Öffnung in Befestigungsplatte 25 |
| 30, 30a | Dosierraum |
| 31 | Schlagkolben (auch zylinderförmiger Hohlkörper genannt) |
| 32 | Antriebskolben |
| 33 | Dichtung |
| 34 | Bodenplatte des Schlagkolbens 31 |
| 35 | Luftraum |
| 36 | Stoßaufnehmer |
| 37 | |
| 38 | Halterung (Extrudergehäuse) |
| 39 | Stoßelement |
| 40 | Freiraum |
| 41 | Antriebsscheibe |
| 42 | Antriebswelle |
| 43 | Kreisbahn |
| 44 | Spiralbahn |
| 45 | Halterung |
| 46 | |
| 47 | Ringspaltöffnung |
| 48 | Öffnung in Schlagkolbenbodenplatte 34 |
| 49 | bewegliche Membran |
| 50 | festes Mittelteil |
| 51 | |
| 52 | |
| 53 | |
| 54 | |
| 55 | Kolbenschaft |
| 56 | Schlagfläche |
| 57 | Dichtung |
| 58 | Bodenplatte des zylinderförmigen festen Mittelteils 50 |
| 59 | 1. Bauteil |
| 60 | 2. Bauteil |
| 61 | Hochspannungserzeuger |

14

**Patentansprüche**

1. Verfahren zur Herstellung von festen Teilchen (8) aus einem flüssigen Ausgangsmedium, wobei aus dem Ausgangsmedium portionsweise flüssige Teilchen (7, 7a) abgetrennt werden und die flüssigen Teilchen (7) in eine Umgebung (V) eingebracht werden, die die Verfestigung der flüssigen Teilchen (7) unter Ausbildung der festen Teilchen (8) bewirkt,
**dadurch gekennzeichnet,**
**dass** zwischen einer Stoßblende (1) und einer Stoßmasse (2) ein Flüssigkeitsfilm (6) über mindestens einer Öffnung (3) aus dem flüssigen Ausgangsmedium ausgebildet wird, auf den Flüssigkeitsfilm (6) ein mechanischer Impuls entlang einer Stoßnormalen (5) übertragen wird und infolge der Impulsübertragung ein Teil des Flüssigkeitsfilms sowie eine Kapillarflüssigkeit, die sich in der mindestens einen Öffnung (3) ausgebildet hat, als flüssiges Teilchen (7, 7a) durch die mindestens eine Öffnung (3) ausgestoßen wird.
wobei die Impulsübertragung auf einen während der Betriebsdauer gleichbleibenden Flüssigkeitsfilm (6) erfolgt.

2. Verfahren nach Anspruch 1,
**dadurch gekennzeichnet,**
**dass** die Impulsübertragung gerade erfolgt.

3. Verfahren nach einem der Ansprüche 1 oder 2
**dadurch gekennzeichnet,**
**dass** die Impulsübertragung zentral erfolgt.

4. Verfahren nach Anspruch 1 oder 2,
**dadurch gekennzeichnet,**
**dass** der Ausstoß der Teilchen (7, 7a) in einem Winkel zur Stoßnormalen (5) erfolgt.

5. Verfahren nach einem der vorhergehenden Ansprüche,
**dadurch gekennzeichnet,**
**dass** sowohl die Stoßblende (1) als auch die Stoßmasse als bewegliche Aktoren wirken.

6. Verfahren nach einem der Ansprüche 1 bis 5,
**dadurch gekennzeichnet,**
**dass** zur Impulsübertragung ein zylinderförmiger Hohlkörper (31) eingesetzt wird, in dem ein Kolben (32) beweglich eingebracht ist, und die Impulsübertragung durch die Bewegung des Kolbens (32) in dem zylinderförmigen Hohlkörper (31) bewirkt wird.

7. Verfahren nach einem der Ansprüche 1 bis 6,
**dadurch gekennzeichnet,**
**dass** feste Teilchen (8) mit einem Kern und mindestens einer Hüllschicht ausgebildet werden.

8. Verfahren nach Anspruch 7,
**dadurch gekennzeichnet,**
**dass** zur Ausbildung der festen Teilchen (8) mit Kern und mindestens einer Hüllschicht unterschiedliche Ausgangsmedien eingesetzt werden.

9. Verfahren nach einem der vorhergehenden Ansprüche,
**dadurch gekennzeichnet,**
**dass** die ausgestoßenen flüssigen Teilchen (7) auf eine spiralförmige Flugbahn (44) gebracht werden.

10. Verfahren nach einem der vorhergehenden Ansprüche,
**dadurch gekennzeichnet,**
**dass** die Stärke des Impulses über die Hubhöhe des Aktors und/oder über die Größe der Schlagfläche jedes Aktors und/oder die Annäherung des Aktors an einen Gegenkörper reguliert wird.

11. Vorrichtung zur Herstellung von festen Teilchen (8) aus einem flüssigen Ausgangsmedium umfassend einen Mikroteilchenextruder (II) mit mindestens einer Stoßvorrichtung (III) mit

- mindestens einer Stoßblende (1).

- einer Stoßmasse (2),
- mindestens einer Öffnung (3, 3a, 48) zum Ausstoß von flüssigen Teilchen (7, 7a, 9, 9a) und
- Mittel (14, 14a) zur Ausbildung eines Flüssigkeitsfilms (6, 6a) auf der Oberfläche der mindestens einen Stoßblende (1),

wobei entweder die Stoßblende (1) oder die Stoßmasse (2) als beweglicher Aktor zur Übertragung eines mechanischen Impulses auf den Flüssigkeitsfilm (6, 6a) ausgeführt sind, und die jeweils entsprechende Stoßmasse (2) beziehungsweise Stoßblende (1) einen feststehenden Gegenkörper bildet oder alternativ sowohl die Stoßblende (1) als auch die Stoßmasse (2) beweglich ausgeführt sind,

wobei zwischen dem Flüssigkeitsfilm (6) und dem Impuls übertragenden Aktor eine Abgrenzung vorgesehen ist gegen die der Aktor bei der Impulsübertragung stößt, und Aktor und Abgrenzung nicht miteinander verbunden sind.

12. Vorrichtung nach Anspruch 11,
**dadurch gekennzeichnet,**
**dass** die Stoßmasse (2) der bewegte Aktor ist und die Stoßblende (1) den feststehenden Gegenkörper bildet.

13. Vorrichtung nach einem der Ansprüche 11 oder 12,
**dadurch gekennzeichnet,**
**dass** die Stoßmasse (2) als zylinderförmiger Hohlkörper (31) mit Bodenplatte (34) ausgeführt ist, wobei in dem zylinderförmigen Hohlkörper (31) ein weiterer Kolben (32) beweglich zur Übertragung eines Impulses vorgesehen ist.

14. Vorrichtung nach einem der Ansprüche 11 bis 13,
**dadurch gekennzeichnet,**
**dass** das Innere des zylinderförmigen Hohlkörpers (31) mit mindestens einer Zuleitung (14a) für ein flüssiges Ausgangsmedium verbunden ist, und die Bodenplatte (34) als Stoßblende wirkt und mindestens eine Öffnung (48) aufweist, die über einer entsprechenden Öffnung (3) in der Stoßblende (1) angeordnet ist und deren Durchmesser geringer als der Durchmesser der entsprechenden Öffnung (3) in der Stoßblende (1) ist.

15. Vorrichtung nach einem der Ansprüche 11 oder 12,
**dadurch gekennzeichnet,**
**dass** der Flüssigkeitsfilm (6) von dem Impuls übertragenden Aktor durch eine bewegliche Membran (49) abgetrennt ist, die ein festes Mittelteil (50) aufweist.

16. Vorrichtung nach Anspruch 15,
**dadurch gekennzeichnet,**
**dass** das feste Mittelteil (50) die Form eines nach oben offenen Zylinders hat.

17. Vorrichtung nach Anspruch 16,
**dadurch gekennzeichnet,**
**dass** der Innenraum des festen Mittelteils (50) in Form eines nach oben offenen Zylinders mit mindestens einer Zuleitung (14a) für ein flüssiges Ausgangsmedium verbunden ist, und die Bodenplatte (58) des festen Mittelteils (50) als Stoßblende wirkt und mindestens eine Öffnung (3a) aufweist, die oberhalb einer entsprechenden Öffnung (3) in der Stoßblende (1) angeordnet ist.

18. Vorrichtung nach einem der Ansprüche 11 bis 17,
**dadurch gekennzeichnet,**
**dass** die Vorrichtung zwei oder mehr übereinander angeordnete Stoßblenden (1) oder als Stoßblenden wirkende Bauteile (34, 58) aufweist, mit jeweils mindestens einer Öffnung (3, 3a, 48), wobei der Durchmesser der mindestens einen Öffnung (3, 3a) in der mindestens einen Stoßblende (1) beziehungsweise den als Stoßblenden wirkenden Bodenteilen (34, 48) zur jeweils darunter liegenden Stoßblende zunimmt und einander entsprechende Öff-nungen (3, 3a, 48) übereinander angeordnet sind.

19. Vorrichtung nach einem der vorhergehenden Ansprüche 11 bis 18,
**dadurch gekennzeichnet,**
**dass** die Vorrichtung zusätzlich einen Stoßaufnehmer (36) zur Übertragung eines von einem Stoßantrieb (I) ausgeübten Impulses auf die Vorrichtung und mindestens eine Stellvorrichtung (23) zur Zurücksetzung des Stoßaufnehmers (36) und/oder des Aktors in die Ausgangslage vor dem Impuls aufweist.

**20.** Vorrichtung nach einem der vorhergehenden Ansprüche,
**dadurch gekennzeichnet,**
**dass** die Öffnung (3) von einem Ringspalt (47) umgeben ist zur Zuführung eines weiteren Ausgangsmediums.

**21.** Vorrichtung nach einem der vorhergehenden Ansprüche 11 bis 20,
enthaltend einen Stoßantrieb zur periodischen Übertragung eines Impulses, der eine oder mehrere mit einer Antriebsscheibe (41) verbundene Stoßelemente (39) umfasst, wobei die Antriebsscheibe (41) über eine Antriebswelle (42) mit einem Motor (4) verbunden ist.

**22.** Vorrichtung nach Anspruch 21,
**dadurch gekennzeichnet,**
**dass** die Stoßelemente (39) des Stoßantriebs zylinderförmig ausgestaltet sind, und senkrecht zwischen zwei Antriebsscheiben (41) mit Freiräumen (40) zwischen jeweils zwei Stoßelementen (39) angeordnet sind.

**23.** Vorrichtung nach einem der Ansprüche 21 oder 22,
**dadurch gekennzeichnet,**
**dass** die Stoßelemente (39) des Stoßantriebs als Erhebungen um die Achse der Antriebswelle (42) auf einer Seite der Antriebsscheibe (41) angeordnet sind, und die Antriebswelle (42) senkrecht auf der Antriebsscheibe (41) angebracht ist.

**24.** Vorrichtung nach einem der Ansprüche 21 bis 23,
**dadurch gekennzeichnet,**
**dass** die Impulsübertragung von dem Stoßantrieb auf den Mikroteilchenextruder mittels magnetischer Kraft erfolgt, wobei entweder das mindestens eine Stoßelement (39) und/oder der Stoßaufnehmer (36) des Mikroteilchenextruders ganz oder teilweise aus einem magnetischen Material besteht.

**25.** Vorrichtung nach einem der Ansprüche 11 bis 24 zusätzlich umfassend eine Vorrichtung zur Erzeugung einer spiralförmigen Flugbahn (44) umfassend

- einen um seine Längsachse drehbaren Hohlzylinder (10), der zumindest in Eintrittsrichtung der Teilchen (7, 9) offen ist,
- mindestens einen elektrisch leitenden Schleifring (15), der die äußere Mantelfläche des Hohlzylinders (10) umgibt und mit dieser fest verbunden ist,
- mindestens eine auf dem Schleifring (15) lose aufliegende, feststehende Schleifbürste (17), die mit einem Hochspannungserzeuger (61) leitend verbindbar ist,
- mindestens eine Elektrode (18), die auf der inneren Mantelfläche des Hohlzylinders (10) angeordnet ist, und die über eine Verbindungsleitung (16) mit einem Schleifring (15) verbunden ist, sowie
- eine Erdungsleitung (13).

**26.** Vorrichtung nach Anspruch 25,
**dadurch gekennzeichnet,**
**dass** die Enden der Verbindungsleitung (16), die in das Innere des Hohlzylinders (10) hineinragen, die mindestens eine Elektrode (18) bilden.

**Claims**

**1.** A method for the production of solid particles (8) from a liquid starting medium, wherein liquid droplets (7, 7a) are separated from the starting medium on a portion-by-portion basis and the liquid droplets (7) are introduced into an environment (V) which is effective to solidify the liquid droplets (7) and thus form the solid particles (8),
**characterized in that,**
a liquid film (6) is formed from the liquid starting medium between an impact screen (1) and an impact mass (2) over at least one opening (3), a mechanical impulse is transmitted to the liquid film (6) along an impact-normal (5) and, as a result of the transmission of the impulse, a part of the liquid film as well as a capillary liquid that has formed in the at least one opening (3) is discharged through the at least one opening (3) in the form of liquid droplets (7, 7a), wherein the impulse transmission is effected on a liquid film (6) which remains unchanged throughout the period of operation.

**2.** A method in accordance with Claim 1,
**characterized in that,**
the impulse transmission takes place in a straight line.

**3.** A method in accordance with either of Claims 1 or 2,
**characterized in that,**
the impulse transmission takes place centrally.

**4.** A method in accordance with Claim 1 or 2,
**characterized in that,**
the discharge of the droplets (7, 7a) takes place at an angle to the impact-normal (5).

**5.** A method in accordance with any of the preceding Claims,
**characterized in that,**
both the impact screen (1) and the impact mass function as moveable actuators.

**6.** A method in accordance with any of the Claims 1 to 5,
**characterized in that,**
a cylindrical hollow body (31) having a moveable piston (32) inserted therein is used for the purposes of the impulse transmission, the impulse transmission being caused by the movement of the piston (32) in the cylindrical hollow body (31).

**7.** A method in accordance with any of the Claims 1 to 6,
**characterized in that,**
solid particles (8) having a core and at least one cladding layer are formed.

**8.** A method in accordance with Claim 7,
**characterized in that,**
different starting media are used for the purposes of forming the solid particles (8) having a core and at least one cladding layer.

**9.** A method in accordance with any of the preceding CLaims,
**characterized in that,**
the discharged liquid droplets (7) are fed along a spiral flight path (44).

**10.** A method in accordance with any of the preceding Claims,
**characterized in that,**
the strength of the impulse is regulated by the length of the stroke of the actuator and/or by the size of the percussion surface of each actuator and/or by the nearness of approach of the actuator with respect to a counter-body.

**11.** A device for the production of solid particles (8) from a liquid starting medium comprising a micro-particle extruder (II) incorporating at least one impact device (III) having

- at least one impact screen (1),
- an impact mass (2),
- at least one opening (3, 3a, 48) for the discharge of liquid droplets (7, 7a, 9, 9a) and
- means (14, 14a) for the formation of a liquid film (6, 6a) on the surface of the at least one impact screen (1),

wherein either the impact screen (1) or the impact mass (2) is implemented in the form of a moveable actuator for the transmission of a mechanical impulse to the liquid film (6, 6a) whilst the respectively corresponding impact mass (2) or impact screen (1) forms a fixed counter-body, or, alternatively, both the impact screen (1) and the impact mass (2) are implemented in moveable manner,
wherein between the liquid film (6) and the impulse transmitting actuator there is provided a boundary against which the actuator strikes during the impulse transmission, and the actuator and the boundary are not connected to one another.

**12.** A device in accordance with Claim 12,
**characterized in that,**

the impact mass (2) is the moved actuator and the impact screen (1) forms the fixed counter-body.

13. A device in accordance with one of the Claims 11 or 12,
   **characterized in that,**
   the impact mass (2) is implemented in the form of a cylindrical hollow body (31) having a base plate (34), and a further moveable piston (32) is provided in the cylindrical hollow body (31) for the purposes of transmitting an impulse.

14. A device in accordance with any of the Claims 11 to 13,
   **characterized in that,**
   the interior of the cylindrical hollow body (31) is connected to at least one supply line (14a) for a liquid starting medium, and **in that** the base plate (34) functions as an impact screen and comprises at least one opening (48) which is arranged above a corresponding opening (3) in the impact screen (1) whilst the diameter thereof is smaller than the diameter of the corresponding opening (3) in the impact screen (1).

15. A device in accordance with one of the Claims 11 or 12,
   **characterized in that,**
   the liquid film (6) is separated from the impulse transmitting actuator by a moveable membrane (49) which has a rigid central section (50).

16. A device in accordance with Claim 15,
   **characterized in that,**
   the rigid central section (50) is in the form of an upwardly open cylinder.

17. A device in accordance with Claim 16,
   **characterized in that,**
   the interior of the rigid central section (50) in the form of an upwardly open cylinder is connected to at least one supply line (14a) for a liquid starting medium, and the base plate (58) of the rigid central section (50) functions as an impact screen and comprises at least one opening (3a) which is arranged above a corresponding opening (3) in the impact screen (1).

18. A device in accordance with any of the Claims 11 to 17,
   **characterized in that,**
   the device comprises two or more impact screens (1) or constructional components (34, 58) that function as impact screens which are arranged one above the other, said screens each incorporating at least one opening (3, 3a, 48), wherein the diameter of the at least one opening (3, 3a) in the at least one impact screen (1) or in the base parts (34, 48) functioning as impact screens increases towards the respective impact screen located therebelow and the respectively corresponding openings (3, 3a, 48) are arranged one above the other.

19. A device in accordance with any of the preceding Claims 11 to 18,
   **characterized in that,**
   the device additionally comprises an impact receiver (36) for the transmission of an impulse produced by an impact drive (I) to the device, and at least one adjusting device (23) for resetting the impact receiver (36) and/or the actuator into the initial position thereof prior to the impulse.

20. A device in accordance with any of the preceding Claims,
   **characterized in that,**
   the opening (3) is surrounded by an annular gap (47) for the supply of a further starting medium.

21. A device in accordance with any of the preceding claims 11 to 20,
   containing an impact drive for the periodic transmission of an impulse comprising one or more impact elements (39) connected to a drive disk (41), wherein the drive disk (41) is connected by a drive shaft (42) to a motor (4).

22. A device in accordance with Claim 21,
   **characterized in that,**
   the impact elements (39) of the impact drive are cylindrical and are arranged perpendicularly between two drive disks (41) with free spaces (40) being provided between each two impact elements (39).

23. An impact drive in accordance with one of the claims 21 or 22,

**characterized in that,**
the impact elements (39) are in the form of elevations arranged around the axis of the drive shaft (42) on one side of the drive disk (41), and the drive shaft (42) is attached perpendicularly to the drive disk (41).

**24.** A device in accordance with any of the claims 21 to 23,
**characterized in that,**
the impulse transmission from the impact drive to the micro-particle extruder is effected by means of magnetic force, whereby either the at least one impact element (39) and/or the impact receiver (36) of the micro-particle extruder consists entirely or partially of a magnetic material.

**25.** A device according to any of the claims 11 to 24 additionally comprising a device for the production of a spiral flight path (44) comprising

- a hollow cylinder (10) which is rotatable about its longitudinal axis and is open at least in the direction of entry of the droplets (7, 9),
- at least one electrically conducting slip-ring (15) which surrounds the outer casing surface of the hollow cylinder (10) and is firmly connected thereto,
- at least one fixed contact brush (17) which rests loosely on the slip-ring (15) and is connectable in conductive manner to a high voltage generator (61),
- at least one electrode (18) which is arranged on the internal casing surface of the hollow cylinder (10) and is connected by a connecting line (16) to a slip-ring (15), and also
- an earthing wire (13).

**26.** A device in accordance with Claim 25,
**characterized in that,**
the ends of the connecting line (16) that project into the interior of the hollow cylinder (10) form the at least one electrode (18).

**Revendications**

**1.** Procédé de production de particules solides (8) à partir d'un milieu de départ liquide, des particules liquides (7, 7a) étant séparées par portions du milieu de départ et les particules liquides (7) étant introduites dans un environnement (V), qui provoque le durcissement des particules liquides (7) en formant les particules solides (8),
**caractérisé en ce**
qu'entre un écran de choc (1) et une masse de choc (2), un film liquide (6) est formé au-dessus d'au moins une ouverture (3) à partir du milieu de départ liquide, une impulsion mécanique est transmise au film liquide (6) le long d'une normale de choc (5) et par suite de la transmission d'impulsion, une partie du film liquide ainsi qu'un liquide capillaire, qui s'est formé dans l'au moins une ouverture (3), sont rejetés sous forme de particule liquide (7, 7a) par l'au moins une ouverture(3),
l'impulsion étant transmise à un film liquide (6) invariable pendant la durée de fonctionnement.

**2.** Procédé selon la revendication 1,
**caractérisé en ce**
que l'impulsion est transmise de façon rectiligne.

**3.** Procédé selon l'une quelconque des revendications 1 ou 2,
**caractérisé en ce**
que l'impulsion est transmise de façon centrale.

**4.** Procédé selon la revendication 1 ou 2,
**caractérisé en ce**
que le rejet des particules (7, 7a) a lieu selon un angle par rapport à la normale de choc (5).

**5.** Procédé selon l'une quelconque des revendications précédentes,
**caractérisé en ce**
qu'aussi bien l'écran de choc (1) que la masse de choc agissent comme des actionneurs mobiles.

**6.** Procédé selon l'une quelconque des revendications 1 à 5,
**caractérisé en ce**
qu'un corps creux (31) cylindrique, dans lequel un piston (32) est introduit de manière mobile, est utilisé pour transmettre l'impulsion et la transmission d'impulsion est induite par le déplacement du piston (32) dans le corps creux (31) cylindrique.

**7.** Procédé selon l'une quelconque des revendications 1 à 6,
**caractérisé en ce**
**que** des particules solides (8) sont réalisées avec un noyau et au moins une couche enveloppe.

**8.** Procédé selon la revendication 7,
**caractérisé en ce**
**que** différents milieux de départ sont utilisés pour réaliser les particules solides (8) avec noyau et au moins une couche enveloppe.

**9.** Procédé selon l'une quelconque des revendications précédentes,
**caractérisé en ce**
**que** les particules liquides (7) rejetées sont placées sur une trajectoire spiroïdale (44).

**10.** Procédé selon l'une quelconque des revendications précédentes,
**caractérisé en ce**
**que** l'intensité de l'impulsion est régulée par la course de l'actionneur et/ou par la taille de la surface de frappe de chaque actionneur et/ou le rapprochement de l'actionneur d'un contre-corps.

**11.** Dispositif de production de particules solides (8) à partir d'un milieu de départ liquide comprenant une extrudeuse de micro-particules (II) dotée d'au moins un dispositif de choc (III) avec

- au moins un écran de choc (1) ;
- une masse de choc (2),
- au moins une ouverture (3, 3a, 48) pour le rejet de particules liquides (7, 7a, 9, 9a) et
- des moyens (14, 14a) pour la réalisation d'un film liquide (6, 6a) sur la surface de l'au moins un écran de choc (1),

dans lequel soit l'écran de choc (1) soit la masse de choc (2) sont réalisés sous forme d'actionneur mobile pour la transmission d'une impulsion mécanique au film liquide (6, 6a) et la masse de choc (2) respectivement l'écran de choc (1) correspondant respectivement forme un contre-corps fixe ou en variante l'écran de choc (1) et la masse de choc (2) sont réalisés de manière mobile,
dans lequel une délimitation est prévue entre le film liquide (6) et l'actionneur transmettant l'impulsion, contre laquelle bute l'actionneur lors de la transmission d'impulsion, et l'actionneur et la délimitation ne sont pas reliés ensemble.

**12.** Dispositif selon la revendication 11,
**caractérisé en ce que**
la masse de choc (2) est l'actionneur mobile et l'écran de choc (1) forme le contre-corps fixe.

**13.** Dispositif selon l'une quelconque des revendications 11 ou 12,
**caractérisé en ce**
**que** la masse de choc (2) est réalisée sous forme de corps creux (31) cylindrique avec plaque de base (34), un autre piston (32) étant prévu de manière mobile dans le corps creux (31) cylindrique pour la transmission d'une impulsion.

**14.** Dispositif selon l'une quelconque des revendications 11 à 13,
**caractérisé en ce**
**que** l'intérieur du corps creux (31) cylindrique est relié à au moins une conduite d'alimentation (14a) pour un milieu de départ liquide et la plaque de base (34) agit comme un écran de choc et présente au moins une ouverture (48), qui est agencée au-dessus d'une ouverture (3) correspondante dans l'écran de choc (1), et dont le diamètre est inférieur au diamètre de l'ouverture (3) correspondante dans l'écran de choc (1).

**15.** Dispositif selon l'une quelconque des revendications 11 ou 12,
**caractérisé en ce**

**que** le film liquide (6) est séparé de l'actionneur transmettant l'impulsion par une membrane mobile (49) qui présente une partie médiane solide (50).

16. Dispositif selon la revendication 15,
**caractérisé en ce**
**que** la partie médiane solide (50) a la forme d'un cylindre ouvert vers le haut.

17. Dispositif selon la revendication 16,
**caractérisé en ce**
**que** l'intérieur de la partie médiane solide (50) en forme de cylindre ouvert vers le haut est relié à au moins une conduite d'alimentation (14a) pour un milieu de départ liquide, et la plaque de base (58) de la partie médiane solide (50) agit comme un écran de choc et présente au moins une ouverture (3a), qui est agencée au-dessus d'une ouverture correspondante (3) dans l'écran de choc (1).

18. Dispositif selon l'une quelconque des revendications 11 à 17,
**caractérisé en ce**
**que** le dispositif présente deux ou plusieurs écrans de choc (1) superposés ou des pièces (34, 58) agissant comme des écrans de choc, avec respectivement au moins une ouverture (3, 3a, 48), le diamètre de l'au moins une ouverture (3, 3a) dans l'au moins un écran de choc (1) respectivement dans les éléments de fond (34, 48) agissant comme des écrans de choc augmentant par rapport à l'écran de choc respectivement sous-jacent et des ouvertures (3, 3a, 48) correspondant les unes aux autres étant superposées.

19. Dispositif selon l'une quelconque des revendications précédentes 11 à 18,
**caractérisé en ce**
**que** le dispositif présente en plus un absorbeur de choc (36) pour la transmission d'une impulsion exercée par un entraînement par choc (I) au dispositif et au moins un dispositif de réglage (23) pour la remise en place de l'absorbeur de choc (36) et/ou de l'actionneur dans la position initiale avant l'impulsion.

20. Dispositif selon l'une quelconque des revendications précédentes,
**caractérisé en ce**
**que** l'ouverture (3) est entourée par une fente annulaire (47) pour l'alimentation d'un autre milieu de départ.

21. Dispositif selon l'une quelconque des revendications précédentes 11 à 20,
comprenant un entraînement par choc pour la transmission périodique d'une impulsion, qui comprend un ou plusieurs éléments de choc (39) reliés à un plateau d'entraînement (41), le plateau d'entraînement (41) étant relié à un moteur (4) par le biais d'un arbre d'entraînement(42).

22. Dispositif selon la revendication 21,
**caractérisé en ce**
**que** les éléments de choc (39) de l'entraînement par choc sont réalisés de manière cylindrique et sont agencés de manière perpendiculaire entre deux disques d'entraînement (41) avec des espaces libres (40) entre respectivement deux éléments de choc (39).

23. Dispositif selon l'une quelconque des revendications 21 ou 22,
**caractérisé en ce**
**que** les éléments de choc (39) de l'entraînement par choc sont agencés sous forme d'élévations autour de l'axe de l'arbre d'entraînement (42) d'un côté du disque d'entraînement (41) et l'arbre d'entraînement (42) est placé de manière perpendiculaire sur le disque d'entraînement (41).

24. Dispositif selon l'une quelconque des revendications 21 à 23,
**caractérisé en ce**
**que** la transmission d'impulsion de l'entraînement par choc à l'extrudeuse de micro-particules se fait au moyen d'une force magnétique, soit l'au moins un élément de choc (39) et/ou l'absorbeur de choc (36) de l'extrudeuse de micro-particules se compose complètement ou partiellement d'un matériau magnétique.

25. Dispositif selon l'une quelconque des revendications 11 à 24 comprenant en plus un dispositif de production d'une trajectoire (44) spiroïdale comprenant

- un cylindre creux (10) rotatif autour de son axe longitudinal, qui est au moins ouvert dans le sens d'entrée des particules (7, 9),

- au moins une bague (15) électroconductrice, qui entoure la surface d'enveloppe extérieure du cylindre creux (10) et est reliée solidement à celle-ci,

- au moins un balai (17) fixe, reposant de manière lâche sur la bague (15), lequel peut être relié de manière conductrice à un générateur haute tension (61),

- au moins une électrode (18), qui est agencée sur la surface d'enveloppe intérieure du cylindre creux (10) et est reliée à une bague (15) par le biais d'une conduite de raccordement (16), et

- une ligne de mise à la terre (13).

**26.** Dispositif selon la revendication 25,
**caractérisé en ce**
**que** les extrémités de la conduite de raccordement (16), qui pénètrent à l'intérieur du cylindre creux (10), forment l'au moins une électrode (18).

Fig.1

Fig.3

Fig.2

Fig.4

Fig.5

Fig.6

25

Fig.7

Fig.7.1

Fig.7.2

Fig.8

Fig.8.1

Fig.8.2

Fig.9

Fig.10

Fig.10.1

Fig.11.1

Fig.11.2

Fig.12.1

C–C

Fig.12.2

Fig.13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2221310 C2
- DE 19617924 A1
- DE 3417899 C1
- DE 4424998 C2
- WO 9632242 A
- US 4150201 A
- WO 0100311 A1
- US 4393021 A
- JP 07251001 A